(19) Europäisches Patentamt
European Patent Office
Office européen des brevets

(11) **EP 4 676 132 A1**

(12) **EUROPEAN PATENT APPLICATION**
published in accordance with Art. 153(4) EPC

(43) Date of publication:
**07.01.2026 Bulletin 2026/02**

(21) Application number: **23945361.6**

(22) Date of filing: **14.07.2023**

(51) International Patent Classification (IPC):
***H04W 56/00*** *(2009.01)*

(52) Cooperative Patent Classification (CPC):
**H04W 56/00**

(86) International application number:
**PCT/CN2023/107536**

(87) International publication number:
**WO 2025/015462 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Teng
Dongguan, Guangdong 523860 (CN)**
• **ZHAO, Zhenshan
Dongguan, Guangdong 523860 (CN)**
• **ZHANG, Shichang
Dongguan, Guangdong 523860 (CN)**

(74) Representative: **Taor, Simon Edward William et al
Venner Shipley LLP
200 Aldersgate
London EC1A 4HD (GB)**

(54) **SIDELINK SYNCHRONIZATION METHOD AND APPARATUS, TERMINAL, CHIP, AND STORAGE MEDIUM**

(57)    Provided in the embodiments of the present application is a sidelink synchronization method. The method comprises: on first frequency domain resources, a terminal sending or receiving sidelink synchronization signal blocks (S-SSBs), wherein the first frequency domain resources are some of frequency domain resources of a system. The method enables the sending or receiving of the S-SSB by using a portion of the frequency-domain resources in the system frequency-domain resources, so that the sending or receiving of the S-SSB can be performed over a relatively small bandwidth, thereby being able to take into consideration terminals with different capabilities in the same communication system, and ensuring that all the terminals can achieve synchronization.

A terminal sends or receives S-SSB on a first frequency domain resource, where the first frequency domain resource is part of a system frequency domain resource — S1701

**FIG. 17**

**Description**

TECHNICAL FIELD

Embodiments of the present disclosure relate to the technical field of communications, and in particular to a sidelink synchronization method and apparatus, a terminal, a chip and a storage medium.

BACKGROUND

Sdelink (SL) synchronization process is a crucial step in SL systems and occurs before SL communication. In existing SL technologies, it is assumed that all terminals in the system have identical capabilities, such as supporting the same bandwidth, the same transmit power, and the like, so in the related art, frequency domain resources and positions for sending/receiving Sidelink Synchronization Signal Blocks (S-SSBs) are supported by all terminals. For example, in a current Sidelink Over Unlicensed Spectrum (SL-U) system, if there are a plurality of Resource Block (RB) sets in the frequency domain, and the S-SSBs need to be sent on the plurality of RB sets, then the terminal also needs to attempt to detect and receive the S-SSBs on the plurality of RB sets.

However, with technological evolution, it has become an inevitable problem to support a plurality of terminals with different communication capabilities in the same communication system, and if it is continuously assumed that all terminals have the same communication capabilities, it will cause certain difficulties in an SL synchronization process among terminals with different capabilities. Therefore, when there are terminals with different capabilities in the system at the same time, how to ensure SL synchronization among the terminals with different capabilities is an urgent problem to be solved at present.

SUMMARY

Embodiments of the present disclosure provide a sidelink synchronization method and apparatus, a terminal, a chip and a storage medium

In a first aspect, the embodiments of the present disclosure provides a sidelink synchronization method, which is applied to a terminal, and the method includes that a sidelink synchronization signal block (S-SSB) is sent or received on a first frequency domain resource, where the first frequency domain resource is part of a system frequency domain resource.

In a second aspect, the embodiments of the present disclosure provide a sidelink synchronization apparatus, and the apparatus includes a transceiver unit. The transceiver unit is configured to send or receive a sidelink synchronization signal block (S-SSB) on a first frequency domain resource, where the first frequency domain resource is part of a system frequency domain resource.

In a third aspect, the embodiments of the present disclosure provide a terminal, including a processor and a memory. The memory is configured to store a computer program, and the processor is configured to call and execute the computer program stored in the memory to implement the above sidelink synchronization method.

In a fourth aspect, the embodiments of the present disclosure provide a chip, which is configured to implement the above sidelink synchronization method. Specifically, the chip includes a processor, which is configured to call and execute a computer program in a memory to cause a device equipped with the chip to implement the above sidelink synchronization method.

In a fifth aspect, the embodiments of the present disclosure provide a computer-readable storage medium, which is configured to store a computer program that causes a computer to implement the above sidelink synchronization method.

In a sixth aspect, the embodiments of the present disclosure provide a computer program product, which includes computer program instructions that cause a computer to implement the above sidelink synchronization method.

In a seventh aspect, the embodiments of the present disclosure provide a computer program that, when running on a computer, causes a computer to implement the above sidelink synchronization method.

In the proposed method, by using part of the system frequency domain resources for sending or reception of S-SSB, it is enabled that the transmission or reception of the S-SSB is performed on a relatively narrower bandwidth, so that terminals with different capabilities in the same communication system can be accommodated, and thus all terminals can be ensured to realize synchronization.

BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure. In the accompanying drawings:

FIG. 1 is a schematic diagram of a sidelink communication within a network coverage provided by an embodiment of the present disclosure.

FIG. 2 is a schematic diagram of a sidelink communication in partial network coverage provided by an embodiment of the present disclosure.

FIG. 3 is a schematic diagram of a sidelink communication outside a network coverage provided by an embodiment of the present disclosure.

FIG. 4 is a schematic diagram of a sidelink communication with a central control node provided by an embodiment of the present disclosure.

FIG. 5 is a schematic diagram of a unicast transmission manner provided by an embodiment of the present disclosure.

FIG. 6 is a schematic diagram of a multicast transmission manner provided by an embodiment of the present disclosure.

FIG. 7 is a schematic diagram of a broadcast transmission manner provided by an embodiment of the present disclosure.

FIG. 8 is a schematic diagram of slot structures in a NR-V2X provided by an embodiment of the present disclosure.

FIG. 9 is a schematic diagram illustrating changes in available OFDM symbols within slots for different transmissions of one PSSCH provided by an embodiment of the present disclosure.

FIG. 10 is a schematic diagram of a mapping manner for second-stage SCI provided by an embodiment of the present disclosure.

FIG. 11 is a schematic diagram of time domain and frequency domain positions of PSCCH DMRS provided by an embodiment of the present disclosure.

FIG. 12 is a schematic diagram of time domain positions of four DMRS symbols when PSSCH has 13 symbols provided by an embodiment of the present disclosure.

FIG. 13 is a schematic diagram of a single-symbol DMRS frequency domain Type 1 provided by an embodiment of the present disclosure.

FIG. 14 is a schematic diagram of time domain and frequency domain positions of SL CSI-RS provided by an embodiment of the present disclosure.

FIG. 15 is a schematic diagram of an example of channel occupancy time and channel occupancy provided by an embodiment of the present disclosure.

FIG. 16 is a schematic diagram of frequency domain resource partitioning provided by an embodiment of the present disclosure.

FIG. 17 is a flowchart of a sidelink synchronization method provided by an embodiment of the present disclosure.

FIG. 18 is a first schematic diagram of a frequency domain resource design scheme for S-SSB provided by an embodiment of the present disclosure.

FIG. 19 is a second schematic diagram of a frequency domain resource design scheme for S-SSB provided by an embodiment of the present disclosure.

FIG. 20 is a structural composition diagram of a sidelink synchronization apparatus provided by an embodiment of the present disclosure.

FIG. 21 is a schematic structural diagram of a communication device provided by an embodiment of the present disclosure.

FIG. 22 is a schematic structural diagram of a chip according to an embodiment of the present disclosure.

DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those of ordinary skill in the art without creative work shall fall within the scope of protection of the present disclosure.

The technical solutions of the embodiments of the present disclosure may be applied to various sidelink communication systems. In order to facilitate understanding of the technical solution of the embodiments of the present disclosure, related technologies of the embodiments of the present disclosure are described as follows. The following related technologies may be arbitrarily combined with the technical solution of the embodiments of the present disclosure as optional solutions, all of which belong to the protection scope of the embodiments of the present disclosure.

1. Sidelink communications in different network coverage environments

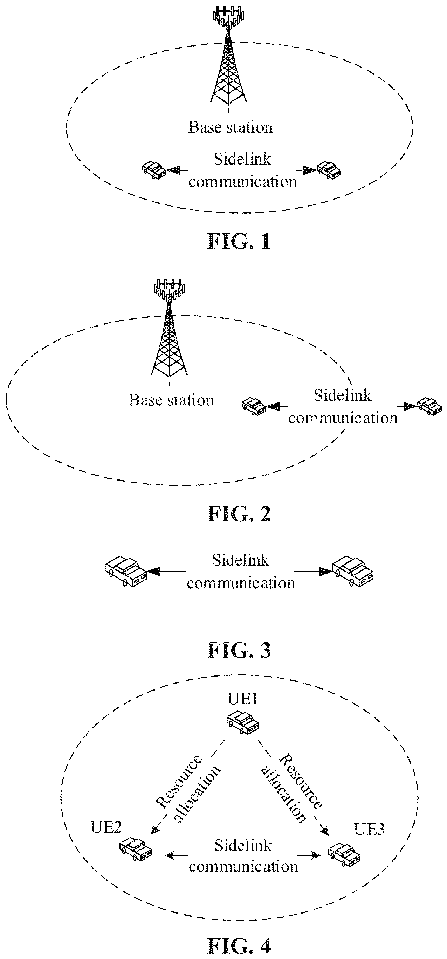

In the sidelink communications, according to situations of network coverage where a communication terminal(s) is located, the sidelink communications may be divided into sidelink communication within network coverage as illustrated in FIG. 1, sidelink communication in partial network coverage as illustrated in FIG. 2, sidelink communication outside network coverage as illustrated in FIG. 3, and sidelink communication with a central control node as illustrated in FIG. 4.

Referring to FIG. 1, in the sidelink communication within the network coverage, all terminals performing sidelink communication are within the coverage of the same base station, so that all of these terminals may perform sidelink communication based on the same sidelink configuration by receiving a configured signaling from the base station.

Referring to FIG. 2, in the sidelink communication in partial network coverage, part of the terminals performing sidelink communication are located within the coverage of the base station, the part of the terminals may receive a configured signaling from the base station and perform sidelink communication according to the configuration of the base station. However, terminals located outside the network coverage cannot receive the configured signaling from the base station. In this case, the terminals outside the network coverage determine a sidelink configuration according to pre-configuration information and information carried in the physical sidelink broadcast channel (PSBCH) sent by the terminal(s) located within the network coverage, and perform sidelink communication.

Referring to FIG. 3, for the sidelink communication outside the network coverage, all terminals performing sidelink communication are located outside the network coverage, and all of the terminals determine sidelink configuration based on pre-configuration information and perform sidelink communication.

Referring to FIG. 4, for the sidelink communication with a central control node, a plurality of terminals form a communication group, and there is a central control node (such as UE1 in FIG. 4) in the communication group. The central control node may also be called a Cluster Header (CH). The central control node has, but is not limited to, at least one of the following functions: responsible for establishment of the communication group; joining and leaving of group members; performing resource coordination, allocating sidelink transmission resources for other terminals and receiving sidelink feedback information from other terminals; performing resource coordination with other communication groups.

2. Device to Device (D2D)/Vehicle to Everything (V2X)

D2D communication is a sidelink transmission technology based on D2D, which is different from a traditional cellular system in which communication data is received or sent through a base station, and thus the D2D communication has higher spectrum efficiency and lower transmission delay. V2X systems adopt this direct terminal-to-terminal communication approach, and the 3rd Generation Partnership Project (3GPP) has defined two transmission modes: mode 1 and mode 2.

In mode 1, transmission resources for terminals are allocated by a base station, and the terminals send data on a sidelink according to resources allocated by the base station. The base station may allocate resources for single transmission to the terminals, and may also allocate resources for semi-persistent transmission to the terminals. As illustrated in FIG. 1, the terminals are located within the network coverage, and the network allocates transmission resources for sidelink transmission to the terminals.

In the second mode, the terminal selects a resource from a resource pool to transmit data. As illustrated in FIG. 3, the terminals are located outside the coverage area of a cell, and the terminals select transmission resources autonomously in a pre-configured resource pool for sidelink transmission. Or, as illustrated in FIG. 1, the terminals select the transmission resources autonomously in the resource pool configured by the network for sidelink transmission.

3. New Radio-Vehicle to Everything (NR-V2X)

In the NR-V2X, automatic driving needs to be supported, so higher requirements are put forward for data interaction between vehicles, such as higher throughput, lower delay, higher reliability, larger coverage and more flexible resource allocation.

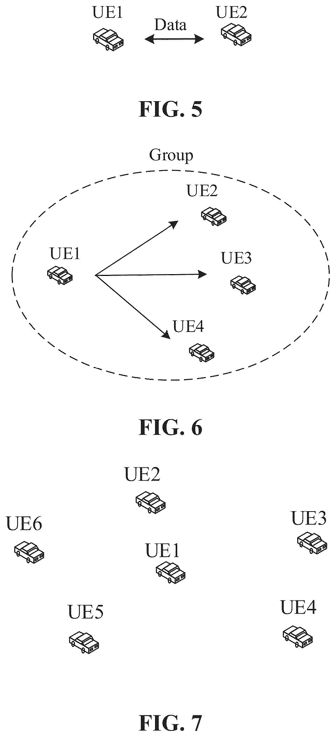

In the LTE-V2X, a broadcast transmission mode is supported, and thus unicast and multicast transmission modes are introduced in the NR-V2X. For unicast transmission, there is only one terminal as a receiver terminal, and as illustrated in FIG. 5, unicast transmission is performed between UE1 and UE2. For multicast transmission, the receiver terminal refers to all terminals in a communication group or all terminals within a certain transmission distance. As illustrated in FIG. 6, UE1, UE2, UE3 and UE4 form a communication group, in which UE1 sends data, and other terminal devices in the group are receiver terminals. In the broadcast transmission mode, the receiver terminal is any terminal around a sender terminal, and as illustrated in FIG. 7, UE1 is the sender terminal, and its surrounding terminals UE2, UE3, UE4, UE5 and UE6 are all receiver terminals.

4. Frame structure of NR-V2X system

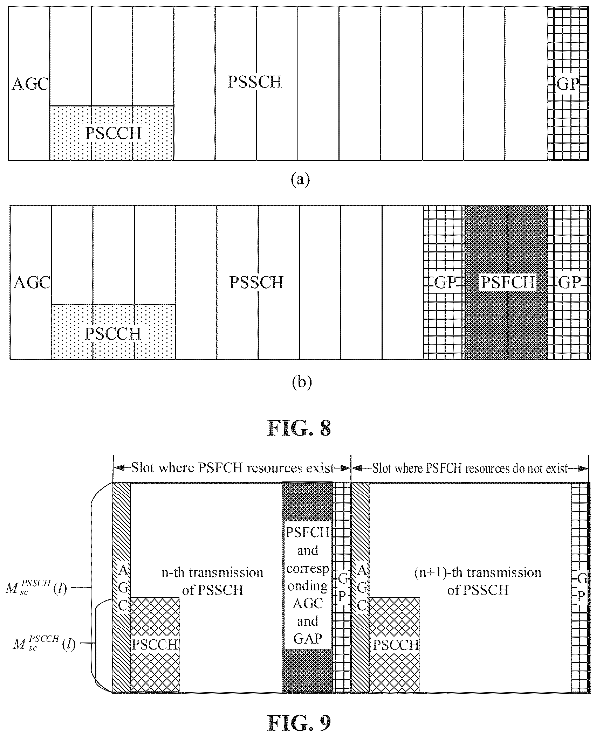

A slot structure of NR-V2X is illustrated in FIG. 8.

Figure (a) in FIG. 8 illustrates a schematic diagram of a slot structure in which a Physical Sidelink Feedback Channel (PSFCH) is not included in the slot, and figure (b) FIG. 8 illustrates a schematic structure diagram of a slot structure in which the PSFCH is included in the slot.

In the NR-V2X, a Physical Sidelink Control Channel (PSCCH) occupies 2 or 3 Orthogonal frequency-division multiplexing (OFDM) symbols in the time domain starting from a second sidelink symbol of the slot, and may occupy {10, 12 15, 20, 25} physical resource blocks (PRBs) in the frequency domain. In order to reduce the complexity of blind detection of PSCCH by UE, only one number of PSCCH symbol and one number of PRB may be configured in a resource pool. In addition, because a sub-channel is the minimum granularity in resource allocation of Physical Sidelink Shared Channel (PSSCH) in the NR-V2X, the number of PRBs occupied by PSCCH must be less than or equal to the number of PRBs contained in a sub-channel within the resource pool, so as to avoid additional restrictions on PSSCH resource selection or allocation. PSSCH also starts from a second sidelink symbol of the slot in time domain, the last time domain symbol in the slot is a Guard Period (GP) symbol, and remaining symbols is used for PSSCH mapping. A first sidelink symbol in the slot is repetition of the second sidelink symbol, the first sidelink symbol is used by the receiver terminal typically as an Automatic Gain Control (AGC) symbol, the data on which is not used for data demodulation typically. PSSCH occupies the number of K sub-channels in the frequency domain, and each sub-channel includes the number of N consecutive PRBs.

When a PSFCH channel is included in a slot, the second-to-last symbol and the third-to-last symbol in the slot are used for PSFCH transmission, and a time domain symbol preceding the PSFCH channel is used as a GP symbol, as illustrated in figure (b) of FIG. 8.

5. Sidelink PSSCH

In the NR-V2X, the PSSCH is used to carry second-stage Sidelink Control Information (SCI) (i.e., SCI 2-A or SCI 2-B) and data information. The second-stage SCI adopts a Polar coding manner and fixedly adopts Quadrature Phase Shift Keying (QPSK) modulation. A data portion of PSSCH uses Low Density Parity Check (LDPC), supporting a maximum modulation order of 256QAM.

In the NR-V2X, PSSCH supports at most transmission of two streams, and uses a unit pre-coding matrix to map data on two layers into two antenna ports. Within a single PSSCH, only one Transport Block (TB) may be sent at most. However, unlike the transmission manner of the data portion of the PSSCH, when the PSSCH adopts a dual-stream transmission manner, modulation symbols sent by the second-stage SCI on the two streams are identical, and such a design can ensure the reception performance of the second-stage SCI in highly correlated channels.

Since the maximum number of retransmissions of one PSSCH in NR-V2X is 32, if PSFCH resources exist in a resource pool and a configured period for the PSFCH resources is 2 or 4, then available OFDM symbols in slots for different transmissions of one PSSCH may change, as illustrated in FIG. 9. If $N_{symbol}^{PSSCH}$ is calculated according to the true number of OFDM symbols in a slot, $Q'_{SCI2}$ may vary due to the difference in the number of symbols available for PSSCH transmission in a slot, whereas the change of $Q'_{SCI2}$ may result in a change in the size of a TB carried by the PSSCH. In order to ensure that a Transport Block Size (TBS) remains unchanged during multiple PSSCH transmissions, when calculating $N_{symbol}^{PSSCH}$, the true number of PSFCH symbols is not used, and moreover, when calculating $M_{sc}^{SCI2}(l)$, the number of Resource Elements (REs) occupied by a PSSCH Demodulation Reference Signal (DMRS) and the number of REs occupied by a Phase-Tracking Reference Signals (PT-RS) that may change in the retransmission process are also not taken into account.

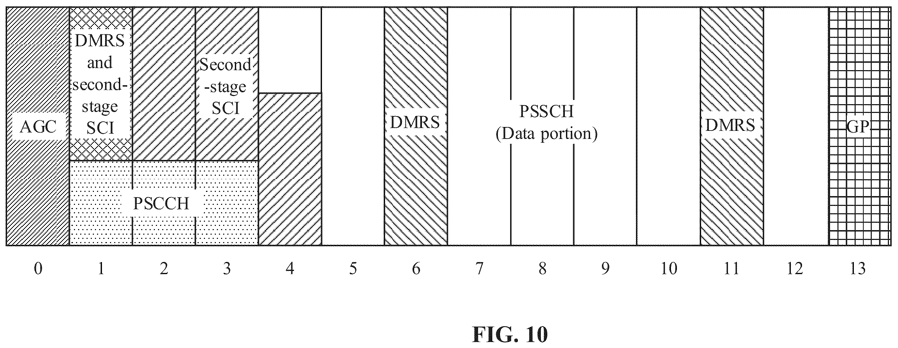

A code rate of the second-stage SCI may be adjusted dynamically within a certain range, and a specific code rate used is indicated by first-stage SCI, so even after the code rate is changed, the receiving end does not need to perform blind detection on the second-stage SCI. The modulation symbols of the second-stage SCI are mapped from a symbol in which a first PSSCH DMRS is located, following a frequency-domain-first and then time-domain mapping approach, and the second-stage SCI is mapped to a RE not occupied by the DMRS on the OFDM symbols in which the DMRS is located, as illustrated in FIG. 10.

The data portion of the PSSCH within a resource pool may employ a plurality of different Modulation and Coding Scheme (MCS) tables, including a conventional 64QAM MCS table, a 256QAM MCS table, and a 64QAM MCS table with low spectral efficiency. A MCS table specifically employed in one transmission is indicated by a "MCS Table Indication" field in the first-stage SCI. In order to control a Peak to Average Power Ratio (PAPR), the PSSCH must be sent using contiguous Physical Resource Blocks (PRBs). Since a sub-channel is the minimum frequency domain resource granularity for the PSSCH, it is required that the PSSCH must occupy continuous sub-channels.

6. Sidelink transport block size

The PSSCH follows a TBS determination mechanism of a Physical Downlink Shared Channel (PDSCH) and a Physical Uplink Shared Channel (PUSCH) in New Radio (NR). That is, the TBS is determined according to a reference value of the number of REs used for PSSCH in the slot where the PSSCH is located, so that an actual code rate is as close as possible to a target code rate. The purpose of using the reference value of the number of REs instead of the actual number of REs herein is to ensure that the number of REs used to determine the TBS in the PSSCH retransmission process remains unchanged, so that the size of the determined TBSs are the same. To achieve this, a reference value $N_{RE}$ for the number of REs occupied by the PSSCH during a TBS determination process is determined according to Equation (1):

$$N_{RE} = N'_{RE} \cdot n_{PRB} - N_{RE}^{SCI,1} - N_{RE}^{SCI,2} \qquad (1)$$

where $n_{PRB}$ is the number of PRBs occupied by the PSSCH, $N_{RE}^{SCI,1}$ is the number of REs (including REs occupied by the DMRS of the PSCCH) occupied by the first-stage SCI, $N_{RE}^{SCI,2}$ is the number of REs occupied by the second-stage SCI, $N'_{RE}$ represents the number of reference REs available for PSSCH within a PRB and is determined by Equation (2):

$$N'_{RE} = N_{sc}^{RB} \left( N_{symb}^{sh} - N_{symb}^{PSFCH} \right) - N_{oh}^{PRB} - N_{RE}^{DMRS} \qquad (2)$$

where $N_{sc}^{RB} = 12$ represents the number of subcarriers in a PRB; $N_{symb}^{sh}$ represents the number of symbols available for sidelink in a slot, excluding the last GP symbol and the first symbol for AGC. $N_{symb}^{PSFCH} = 0$ or 3, whose specific value is indicated by a "PSFCH symbol number" field in the first-stage SCI, and is a reference value of the number of symbols occupied by the PSFCH. The value of $N_{oh}^{PRB}$ is configured by a Radio Resource Control (RRC) layer parameter, and is used to represent a reference value of the number of REs occupied by PT-RS and CSI-RS. $N_{RE}^{DMRS}$ represents an average number of DMRS REs in a slot, and is related to the allowed DMRS pattern in the resource pool, as illustrated in Table 1.

Table 1

| Correspondence of allowed DMRS patterns in resource pool and $N_{RE}^{DMRS}$ | |
|---|---|
| DMRS pattern | $N_{RE}^{DMRS}$ |
| {2} | 12 |
| {3} | 18 |
| {4} | 24 |
| {2,3} | 15 |
| {2,4} | 18 |
| {3,4} | 21 |
| {2,3,4} | 18 |

7. Sidelink DMRS

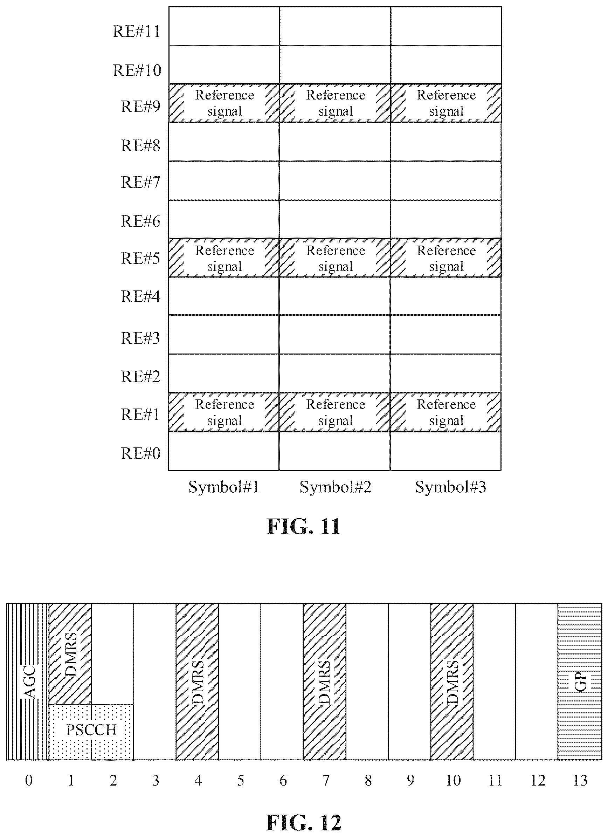

In the NR-V2X, the DMRS pattern of the PSCCH is the same as that of the NR Physical Downlink Control Channel (PDCCH), that is, DMRS exists on OFDM symbols of each PSCCH, and is located on {#1, #5, #9} REs of one PRB in the frequency domain, as illustrated in FIG. 11. The DMRS sequence of PSCCH is generated by Equation (3):

$$r_l(m) = \frac{1}{\sqrt{2}}\big(1-2c(m)\big) + j\frac{1}{\sqrt{2}}\big(1-2c(m+1)\big) \qquad (3)$$

where the pseudo-random sequence c(m) is initialized by $c_{\text{init}} = \Big(2^{17}\big(N_{\text{symb}}^{\text{slot}} n_{\text{s,f}}^{\mu} + l + 1\big)\big(2N_{\text{ID}} + 1\big) + 2N_{\text{ID}}\Big)\bmod 2^{31}$, in which $l$ is an index of an OFDM symbol where the DMRS is located in a slot, $n_{\text{s,f}}^{\mu}$ is an index of the slot where the DMRS is located in the system frame, $N_{\text{symb}}^{\text{slot}}$ represents the number of OFDM symbols in a slot, $N_{\text{ID}} \in \{0,1,\cdots,65535\}$, and within a resource pool, a specific value of $N_{\text{ID}}$ is configured by the network or pre-configured.

The NR-V2X draws on a design in a NR Uu interface and employs multiple time-domain PSSCH DMRS patterns. In a resource pool, the number of available DMRS patterns is related to the number of PSSCH symbols in the resource pool. For a specific number of PSSCH symbols (including the first AGC symbol) and specific number of PSCCH symbols, the available DMRS patterns and positions of each DMRS symbol in respective patterns are illustrated in Table 2. FIG. 12 provides a schematic diagram of time domain positions of four DMRS symbols when PSSCH has 13 symbols.

Table 2 Numbers and positions of DMRS symbols under different number of PSSCH symbols and different number of PSCCH symbols

| Number of PSSCH symbols (including first AGC symbol) | Positions of DMRS symbols (relative to position of first AGC symbol) | | | | | |
| --- | --- | --- | --- | --- | --- | --- |
| | Number of PSCCH symbols is 2 | | | Number of PSCCH symbols is 3 | | |
| | Number of DMRS symbols | | | Number of DMRS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in the resource pool, the specific time domain DMRS pattern to be used is selected by sending UE and indicated in the first-stage SCI. Such a design allows high-speed moving UE to select a high-density DMRS pattern, thereby ensuring the accuracy of channel estimation, while for low-speed moving UE, a low-density DMRS pattern may be adopted, thereby improving spectral efficiency.

The generation manner of PSSCH DMRS sequence and the generation manner of PSCCH DMRS sequence are almost identical, with the only difference being that in the initialization formula $c_{\text{init}}$ of the pseudo-random sequence c(m),

$N_{ID} = \sum_{i=0}^{L-1} p_i \cdot 2^{L-1-i}$, where $P_i$ is an i-th bit Cyclic Redundancy Check (CRC) of the PSCCH for scheduling the PSSCH, L= 24, which is the number of bits of PSCCH CRC.

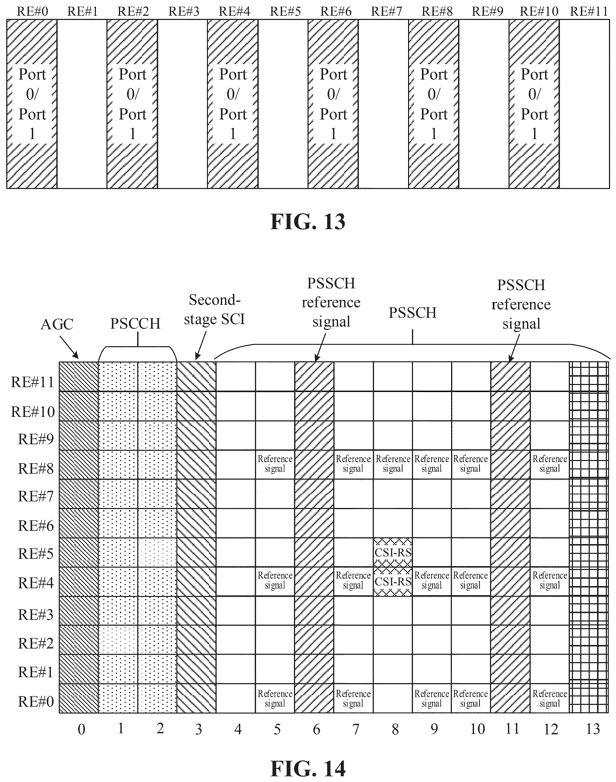

NR PDSCH and PUSCH support two frequency domain DMRS patterns, namely, DMRS frequency domain type 1 and DMRS frequency domain type 2, and for each frequency domain type, there are two different types of single-symbol DMRS and double-symbol DMRS. Single-symbol DMRS frequency domain type 1 supports 4 DMRS ports, and single-symbol DMRS frequency domain type 2 may support 6 DMRS ports. In a case of double-symbol DMRS, the number of all supported ports is doubled. However, in the NR-V2X, since the PSSCH only needs to support two DMRS ports at most, only a single-symbol DMRS frequency domain type 1 is supported, as illustrated in FIG. 13.

8. Sidelink Channel State Information Reference Signal (CSI-RS)

In order to better support unicast communication, SL CSI-RS is supported in NR-V2X, and the SL CSI-RS will only be sent when the following three conditions are met.

1) The UE sends a corresponding PSSCH, that is, the UE cannot send SL CSI-RS only.
2) Sidelink CSI reporting is activated by higher-layer signaling.
3) Under a condition that sidelink CSI reporting is activated by the higher-layer signaling, a corresponding bit in the second-stage SCI sent by the UE triggers a sidelink CSI reporting.

The maximum number of ports supported by SL CSI-RS is 2. When there are two ports configured, SL CSI-RSs for different ports are multiplexed via code division on two adjacent REs within the same OFDM symbol. The number of SL CSI-RSs for each port within one PRB is 1, that is, a density is 1. Therefore, within a PRB, the SL CSI-RS will at most appear only on one OFDM symbol, and a specific position of the OFDM symbol is determined by the sending terminal. In order to avoid affecting the resource mapping of the PSCCH and the second-stage SCI, the SL CSI-RS cannot be located in the same OFDM symbol as the PSCCH and the second-stage SCI. Since the channel estimation accuracy is higher on the OFDM symbol where the PSSCH DMRS is located, and the SL CSI-RS for the two ports will occupy two consecutive REs in the frequency domain, the SL-CSI-RS also cannot be sent on the same OFDM symbol as the PSSCH DMRS. The position of the OFDM symbol where the SL CSI-RS is located is indicated by a parameter *sl-CSI-RS-FirstSymbol* in the PC5 RRC.

The position of the first RE occupied by the SL CSI-RS within one PRB is indicated by the parameter *sl-CSI-RS-FreqAllocation* in the PC5 RRC. If the SL CSI-RS is configured with one port, the parameter is a bitmap with a length of 12 bits, corresponding to 12 REs in one PRB. If the SL CSI-RS is configured with two ports, the parameter is a 6-bit bitmap, in which case the SL CSI-RS occupies two REs $2f(1)$ and $2f(1)+1$, where $f(1)$ indicates an index of a bit set to 1 in the above bitmap. The frequency domain position of the SL CSI-RS is also determined by the sending terminal, but the determined frequency domain position of the SL CSI-RSs must not conflict with a PT-RS. FIG. 14 illustrates a schematic diagram of time domain and frequency domain positions of SL CSI-RSs. In FIG. 14, the number of ports of SL CSI-RS is 2, *sl-CSI-RS-FirstSymbol* is 8, *sl-CSI-RS-FreqAllocation* is $[b_5, b_4, b_3, b_2, b_1, b_0] = [0, 0, 0, 1, 0, 0]$

9. 5G NR-unlicensed (NR-U) spectrum communication

The NR system introduced in 3GPP R15 standard is a communication technology for use on both legacy and newly licensed spectrum. The NR system can achieve seamless cellular network coverage, high spectral efficiency, high peak rates, and high reliability. In Long Term Evolution (LTE) systems, the use of unlicensed spectrum (or license-exempt spectrum) as a complementary frequency band of licensed spectrum for cellular networks has been implemented. Similarly, NR systems may also use unlicensed spectrum as part of 5G cellular network technology to provide services to users. In 3GPP R16 standard, NR systems used on unlicensed spectrum, called NR-unlicensed (NR-U), are discussed.

The NR-U system supports two networking modes, including licensed spectrum assisted access and unlicensed spectrum standalone access. The licensed spectrum assisted access needs to access the network through the licensed spectrum, and the unlicensed spectrum is used as a secondary carrier. The unlicensed spectrum standalone access allows independent networking standalone solely through the unlicensed spectrum, and the UE may access the network directly through the unlicensed spectrum. A range of unlicensed spectrum used by the NR-U system introduced in 3GPP R16 is concentrated on frequency bands of 5 GHz and 6 GHz, such as 5925-7125 MHz in United States America, or 5925-6425 MHz in Europe. In the R16 standard, a new band 46 (i.e., 5150MHz-5925MHz) is defined as an unlicensed spectrum.

The unlicensed spectrum is a spectrum divided by countries and regions for radio device communication. The spectrum is usually considered as a shared spectrum, that is, a communication device may use the spectrum as long as they meet regulatory requirements set by countries or regions for the spectrum, without the need to apply for an exclusive spectrum license from a dedicated spectrum management agency of the countries or regions. Since the use of unlicensed spectrum needs to meet the requirements of specific regulations in each country and region, for example, the communication device uses the unlicensed spectrum according to a principle of "Listen Before Talk (LBT)", and thus NR technology needs to be enhanced accordingly to adapt to the regulatory requirements of unlicensed frequency bands while efficiently utilizing unlicensed spectrum to provide services. In the 3GPP R16 standard, the standardization of NR-U technology mainly covered the following aspects: a channel monitoring process; an initial access procedure; a control channel design; a Hybrid Automatic Repeat reQuest (HARQ) and scheduling; and a grant-free transmission, etc.

10. Channel monitoring: LBT

In order for various communication systems that use the unlicensed spectrum for wireless communication to coexist harmoniously on the spectrum, some countries or regions have stipulated regulatory requirements that must be met when using the unlicensed spectrum. For example, according to regulations in Europe, when using the unlicensed spectrum for communication, the communication device follows the principle of "LBT", that is, the communication device needs to perform LBT or channel monitoring, before using channels in the unlicensed spectrum for signal transmission. Only when a channel monitoring result is that the channel is idle or LBT is successful, the communication device may send signals through the channel. If the channel monitoring result of the communication device on the channel is that the channel is busy or the LBT fails, the communication device cannot send signals through the channel. In addition, in order to ensure fairness in the use of spectrum resources of the shared spectrum, if the communication device performs LBT on the channels in the unlicensed spectrum successfully, the communication device may use the channel for communication transmission for no more than a certain duration. By limiting the maximum communication duration after a successful LBT, the mechanism allows different communication devices to have an opportunity to access the shared channel, thereby enabling different communication systems to coexist harmoniously on the shared spectrum.

Although channel monitoring is not a global regulation, because channel monitoring can bring benefits of interference avoidance and harmonious coexistence to the communication transmission between communication systems on the shared spectrum, in a design process of NR system on the unlicensed spectrum, channel monitoring must be supported by the communication devices in the system. From a perspective of system network layout, channel monitoring includes two mechanisms, one is LBT with Load Based equipment (LBE), also known as dynamic channel monitoring or dynamic channel occupancy, and the other is LBT with Frame Based Equipment (FBE), also known as semi-persistent channel monitoring or semi-persistent channel occupancy.

11. Dynamic channel monitoring

The dynamic channel monitoring may also be regarded as an LBE-based LBT manner. A channel monitoring principle of the dynamic channel monitoring is that the communication device performs LBT on a carrier of the unlicensed spectrum after the service arrives, and starts signal transmission on the carrier after the LBT is successful. The LBT manner for dynamic channel monitoring includes a Type1 channel access manner and a Type2 channel access manner. The Type1 channel access manner is multi-slot channel detection based on random backoff with adjustable contention window, where a corresponding Channel Access Priority Class (CAPC) p may be selected according to a priority of the service to be sent. The Type2 channel access manner is a channel access manner based on a fixed-length monitoring slot, where the Type2 channel access manner includes a Type2A channel access, a Type2B channel access, and a Type2C channel access. The Type1 channel access manner is mainly used for the communication device to initiate channel occupancy, and the Type2 channel access manner is mainly used for the communication device to share channel occupancy. It is to be noted that in a special case, when the base station initiates channel occupancy for sending a Synchronization Signal/Physical Broadcast Channel (SS/PBCH) block in a Discover Reference Symbol (DRS) window and unicast data transmission for the UE is not included in the DRS window, if a length of the DRS window does not exceed 1ms and a duty cycle of transmission within the DRS window does not exceed 1/20, then the base station may use Type 2A channel access to initiate channel occupancy.

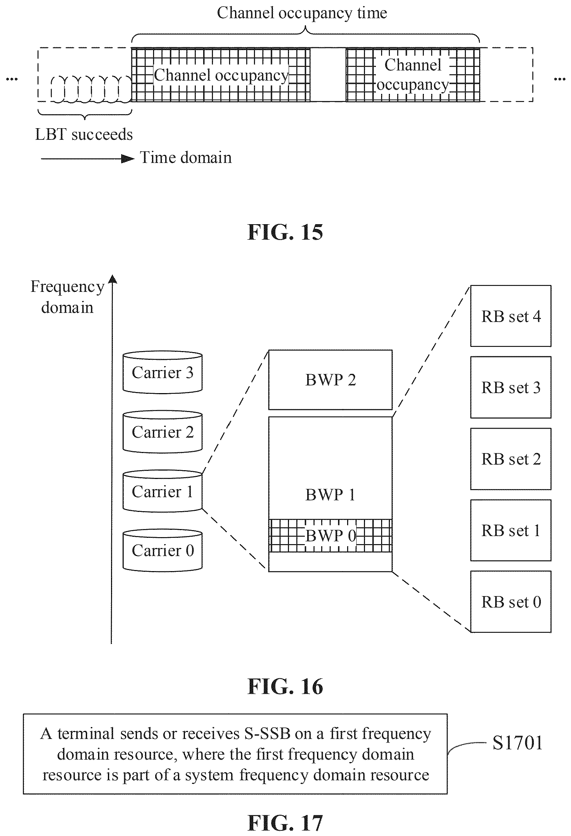

FIG. 15 illustrates an example of a channel occupancy time obtained by a communication device after a successful LBT on a channel of an unlicensed spectrum as well as the use of resources within the channel occupancy time for signal transmission.

12. Default channel access manner on the base station side: Type1 channel access

Taking a base station as an example, channel access parameters corresponding to a channel access priority $p$ on the base station side are illustrated in Table 3. In Table 3, $m_p$ refers to the number of backoff slots corresponding to the channel access priority p, CWp refers to a size of a Contention Window (CW) corresponding to channel access priority p, $CW_{min,p}$ refers to a minimum value of $CW_p$ corresponding to channel access priority p, $CW_{max,p}$ refers to a maximum value of $CW_p$ corresponding to channel access priority p, $T_{mcot,p}$ refers to a maximum length of channel occupancy time corresponding to channel access priority p.

If the channel access process is completed, the base station may use the channel for the transmission of the services to be sent. The maximum time length for which the base station may use the channel for transmission cannot exceed $T_{mcot,p}$.

Table 3 channel access parameters corresponding to different channel access priorities p

| Channel access priority ($p$) | $m_p$ | $CW_{min,p}$ | $CW_{max,p}$ | $T_{mcot,p}$ | Values of allowed $CW_p$ |
|---|---|---|---|---|---|
| 1 | 1 | 3 | 7 | 2 ms | {3,7} |
| 2 | 1 | 7 | 15 | 3 ms | {7,15} |

(continued)

| Channel access priority (p) | $m_p$ | $CW_{min,p}$ | $CW_{max,p}$ | $T_{mcot,p}$ | Values of allowed $CW_p$ |
|---|---|---|---|---|---|
| 3 | 3 | 15 | 63 | 8 or 10 ms | {15,31,63} |
| 4 | 7 | 15 | 1023 | 8 or 10 ms | {15,31,63,127,255,511,1023} |

13. Channel occupancy time sharing on the base station side

After the base station initiates a Channel Occupancy Time (COT), it may not only use resources within the COT for downlink transmission, but also share them with the UEs for uplink transmission. When the resources in the COT are shared with the UE for uplink transmission, the channel access manner that the UE may use is Type2A channel access, Type2B channel access, or Type2C channel access, where all of the Type2A channel access, Type2B channel access, and Type2C channel access are channel access manners based on fixed-length monitoring slots.

Type 2A channel access:

The channel detection manner of the UE is single-slot channel detection of 25 $\mu$s. Specifically, under Type2A channel access, the UE may perform channel monitoring for 25 $\mu$s before transmission starts, and perform transmission after the channel monitoring is successful.

Type 2B channel access:

The channel detection manner of the UE is single-slot channel detection of 16 $\mu$s. Specifically, under Type2B channel access, the UE may perform channel monitoring for 16 $\mu$s before transmission starts, and perform transmission after the channel monitoring is successful. The gap gap between a starting position of the transmission and an ending position of a last transmission is 16 $\mu$s.

Type 2C channel access:

UE performs transmission without channel detection after the gap. Specifically, under the Type 2C channel access, UE may perform transmission directly, where the gap size between the starting position of the transmission and the ending position of the last transmission is less than or equal to 16 $\mu$s. The duration of the transmission does not exceed 584 $\mu$s.

14. Channel access parameter indication (including Cyclic Prefix Extension (CPE))

In the NR-U system, when the UE is scheduled to transmit a Physical Uplink Shared Channel (PUSCH) or a Physical Uplink Control Channel (PUCCH), the base station may indicate a channel access manner corresponding to the PUSCH or the PUCCH by Downlink Control Information (DCI) carrying an uplink (UL) grant or a downlink (DL) grant. Since some channel access manners need to meet a gap requirement of 16 $\mu$s or 25 $\mu$s, the UE may ensure the gap size between two transmissions by transmitting the CPE, and accordingly, the base station may indicate a CPE length of a first symbol for the uplink transmission of the UE.
In the specific indication, the base station may explicitly indicate channel access parameters such as CPE length, channel access manner, or channel access priority to the UE by joint coding. The following describes characteristics of indication manners of channel access parameters introduced in different DCI formats.

1) Fallback UL grant for scheduling PUSCH transmission (DCI format 0_0):

The standard predefines a set of joint indications for channel access manners and CPE lengths, as illustrated in Table 4. The fallback UL grant includes 2-bit LBT indication information for indicating jointly coded channel access manner and CPE length from the set illustrated in Table 4. The channel access manner and CPE length are used for PUSCH transmission. If the channel access manner is Type1 channel access, the UE selects the CAPC independently according to a service priority.

2) Fallback DL grant for scheduling PDSCH transmission (DCI format 1_0):

The standard predefines a set of joint indications for channel access manners and CPE lengths, as illustrated in Table 4. The fallback DL grant includes 2-bit LBT indication information for indicating jointly coded channel access manner and CPE length from the set illustrated in Table 4. The channel access manner and CPE length are used for transmission of a PUCCH, where the PUCCH may carry either an ACKnowledgement (ACK) or a Negative ACKnowledgement (NACK) corresponding to PDSCH. If the channel access manner is Type1 channel access, the UE determines that the channel access priority for PUCCH transmission is CAPC=1.

Table 4 Set of joint indications for channel access manners and CPE lengths

| LBT indication | channel access manner | CPE length |
| --- | --- | --- |
| 0 | Type2C channel access | C2* symbol length -16$\mu$s-TA |
| 1 | Type2A channel access | C3* symbol length -25$\mu$s-TA |
| 2 | Type2A channel access | C1* symbol length -25$\mu$s |
| 3 | Type1 channel access | 0 |

In Table 4, a value of C1 is specified by a protocol. When a subcarrier spacing is 15kHz and 30kHz, C1=1. When the subcarrier spacing is 60kHz, C1=2. Values of C2 and C3 are configured by higher layer parameters. When the subcarrier spacing is 15 kHz and 30kHz, values of C2 and C3 range from 1 to 28. When the subcarrier spacing is 60kHz, the values of C2 and C3 range from 2 to 28.

3) Non-fallback UL grant for scheduling PUSCH transmission (DCI format 0_1):

The higher layer configures an LBT parameter indication set, and the LBT parameter indication set includes at least one jointly coded channel access manner, CPE length and CAPC. The non-fallback UL grant includes LBT indication information for indicating a jointly coded channel access manner, CPE length and CAPC from the LBT parameter indication set. The channel access manner, the CPE length and the CAPC are used for PUSCH transmission. If the indicated channel access manner is Type2 channel access, the CAPC indicated at the same time is a CAPC used by the base station when obtaining the COT. The LBT indication information includes at most 6 bits.

4) Non-fallback DL grant for scheduling PDSCH transmission (DCI format 1_1):

The higher layer configures an LBT parameter indication set, and the LBT parameter indication set includes at least one jointly coded channel access manner and CPE length. The non-fallback downlink grant includes LBT indication information for indicating a jointly coded channel access manner and CPE length from the LBT parameter indication set. The channel access manner and the CPE length are used for PUCCH transmission, and the PUCCH may carry ACK or NACK information corresponding to the PDSCH. If the channel access manner is Type1 channel access, the UE determines that the channel access priority for PUCCH transmission is CAPC=1. The LBT indication information includes at most 4 bits.

In addition to the above explicit indication, the base station may also implicitly indicate the channel access manner within the COT. When the UE receives the UL grant or the DL grant sent by the base station indicating that the channel access type corresponding to the PUSCH or the PUCCH is Type1 channel access, if the UE can determine that the PUSCH or the PUCCH is within COT of the base station, for example, the UE receives DCI format 2_0 sent by the base station and determines that the PUSCH or the PUCCH is within the COT of the base station according to the DCI format 2_0, then the UE may update the channel access type corresponding to the PUSCH or the PUCCH to Type2A channel access instead of using the Type1 channel access.

15. Channel access parameter indication (including CPE)

A frequency domain resource division of the sidelink is similar to that of Uu, as illustrated in FIG. 16. When a frequency domain resource includes multiple carriers, the terminal and the system need to support a function of carrier aggregation. The system may also support only a single carrier scenario, and at this time, carrier aggregation is not required. Frequency resources of a single carrier may be divided into one or more bandwidth parts (BWPs). Currently, when there are multiple BWPs in the frequency domain, only one BWP is supported to be activated at a time. Moreover, in SL systems, only one sidelink bandwidth part (SL BWP) is currently supported. In the NR-U (i.e., unlicensed frequency band) system, one BWP is divided into a plurality of RB sets, each of which has a size of 20 MHz, and one RB set is the smallest unit for LBT. For example, in FIG. 16, BWP 1 is divided into RB set 0 to RB set 4.

The relevant technologies/terms involved in the embodiments of the present disclosure have been briefly described above, and the following embodiments will not be repeatedly described.

It is to be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the term "indicate" in embodiments of the present disclosure may be a direct indication, may be an indirect indication, or may indicate an association relationship. For example, A indicates B, meaning that A directly indicates B, for example, B may be obtained through A. It may also mean that A indirectly indicates B, for example, A indicates C, and B may be obtained by C. It may also indicate that there is an association relationship between A and B. It is to be understood that "correspond" in the description of embodiments of the present disclosure may mean that there is a direct correspondence or an indirect correspondence relationship between the two, may also mean that there is an association relationship between the two, may also be a relationship between indication and being indicated, configuration and being configured, etc. It is also to be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure.

It is also to be understood that the terminal in the embodiments of the present disclosure may refer to an access terminal, user equipment (UE), a subscriber unit, a subscriber station, a mobile station, a mobile platform, a remote station, a remote terminal, a mobile device, a user terminal, a terminal device, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

In existing SL technologies, it is assumed that all terminals in the system have identical capabilities, such as supporting the same bandwidth, the same transmit power, and the like, so in the related art, frequency domain resources and positions for sending/receiving S-SSBs are supported by all terminals. For example, in a current SL-U system, if there are a plurality of RB sets in the frequency domain, and the S-SSBs need to be sent on the plurality of RB sets, then the terminal also needs to attempt to detect and receive the S-SSBs on the plurality of RB sets.

With technological evolutions, it has become an inevitable problem to support a plurality of terminal devices with different communication capabilities in the same communication system, and if it is continuously assumed that all terminals have the same communication capabilities, it will cause certain difficulties in the communication of reduced-capability terminals (such as smart watches, bracelets, AR/VR glasses, etc.). For example, reduced-capability terminals typically cannot support bandwidths as large as those of mobile phones. For example, a mobile phone may support a bandwidth of 100MHz, a smart watch communicating with the mobile phone may only support a maximum bandwidth of 5MHz or 20MHz. As a result, in real communication scenarios, different capabilities (i.e., bandwidths) of terminals may lead to the following problems:

1) For communications between full-capability terminals (such as the mobile phone) and reduced-capability terminals, if a communication bandwidth of the full-capability terminals is reduced to ensure normal communication for the reduced-capability terminals, it will lead to system bandwidth congestion and wastage of bandwidth resources.
2) If a communication manner of full bandwidth is continued to be used by the full-capability terminals, the reduced-capability terminals will be unable to participate in communication. For example, if the full-capability terminals send data via broadcasting or multicasting manner, the reduced-capability terminals, as receivers, will be unable to receive the data over the full bandwidth.

The SL synchronization process, as a very important link and step in the SL system, occurs before the SL communication. It is highly efficient to consider solutions for the synchronization process and the transmission/reception of S-SSB to address communication issues between terminals with different capabilities. This is because the synchronization process involves simple steps, requires less data volume for information exchange, and occupies smaller resources. Therefore, performing S-SSB transmission/reception on a narrower bandwidth can accommodate terminal devices with different capabilities, ensuring synchronization for all devices. Subsequent communication processes, due to differences in service types and data volumes, may be discussed separately from the solution proposed in the present disclosure.

In light of this, the present disclosure provides a sidelink synchronization method and apparatus, a terminal, a chip, and a storage medium. The method may be executed by a terminal, or executed by a chip, a chip system, or a circuit configured within the terminal, which is not limited by the embodiments of the present disclosure. For convenience of description, the following will take an example of being executed by a terminal for illustration.

In the method, the terminal may send or receive S-SSB on a first frequency domain resource. The first frequency domain resource is part of a system frequency domain resource. In the proposed method, by using part of the system frequency domain resource to send or receive the S-SSB, it is enabled that the transmission or reception of the S-SSB is performed on a relatively narrower bandwidth, so that terminals with different capabilities in the same communication system can be accommodated, and thus all terminals can be ensured to realize synchronization.

In order to facilitate understanding of the technical solution of the embodiments of the present disclosure, the technical solution of the present disclosure will be described in detail by specific embodiments below. The above related technologies may be combined with the technical solution of the embodiments of the present disclosure arbitrarily as optional solutions, all of which belong to the protection scope of the embodiments of the present disclosure. Embodiments of the present disclosure include at least some of the following.

FIG. 17 is a flowchart of a sidelink synchronization method provided by an embodiment of the present disclosure. As illustrated in FIG. 17, the sidelink synchronization method may include the following operation S1701.

At S1701, a terminal sends or receives a S-SSB on a first frequency domain resource, where the first frequency domain resource is part of a system frequency domain resource.

The first frequency domain resource may for example be defined, preconfigured, or configured by a network. The first frequency domain resource may be used as a common frequency domain resource between different terminals in a communication system for transmission or reception of the S-SSB. That is, each terminal needs to send or receive the S-SSB at least on the first frequency domain resource.

Exemplarily, the communication system may include a plurality of terminal devices with different capabilities simultaneously. The first frequency domain resource may be determined, for example, according to capabilities of different terminals in the communication system. For example, each terminal may report its own capabilities to the network device, so that the network device may configure the first frequency domain resource by considering the capabilities of each terminal. As an example, the first frequency domain resource configured by the network device needs to accommodate reduced-capability terminals in the communication system, so that the reduced-capability terminals are at least capable of sending/receiving S-SSBs on the first frequency domain resource, and thus ensure that all terminals can realize synchronization while accommodating the reduced-capability terminals. As another example, each terminal may be pre-configured with a smaller common frequency domain resource for sending for receiving S-SSBs to accommodate the reduced-capability terminals in the communication system.

For convenience of explanation, in the embodiments of the present disclosure, terminals with stronger capabilities are referred to as a first type of terminals, while reduced-capability terminals are referred to as a second type of terminals. The first type of terminals may also be called full-capability terminals or high-capability terminals (such as mobile phones). The second type of terminals may also be called reduced-capability terminals (such as smart watches, bracelets, AR/VR glasses, etc.). Generally, a bandwidth supported by the second type of terminals for sending/receiving information is relatively narrower, or in other words, the second type of terminals may support sending/receiving information on a sub-bandwidth but cannot support sending/receiving information across the full bandwidth. In addition, in some scenarios, a transmit power of the second type of terminals is also smaller, and their encoding/decoding capabilities may be limited.

Several possible implementation manners of the sidelink synchronization method according to the embodiments of the present disclosure are described below.

In a first implementation (referred to as implementation #1), the system frequency domain resource may include a plurality of S-SSB frequency domain resources within an SL BWP. The first frequency domain resource is part of the plurality of S-SSB frequency domain resources.

For example, assuming that the system supports one SL BWP and supports that the SL BWP contains N (N is greater than 1) S-SSB frequency domain resources, or in other words, the system frequency domain resource include N S-SSB frequency domain resources within one SL BWP, then the first frequency domain resource may be, for instance, $N_1$ ($N_1$<N) S-SSB frequency domain resources in the N S-SSB frequency domain resources. A value of $N_1$ may be determined, for example, by definition, pre-configuration or a configuration from the network.

In some embodiments, frequency domain positions and/or a number of the plurality of S-SSB frequency domain resources are configured by the network or pre-configured. For example, when the system frequency domain resource includes N S-SSB frequency domain resources in one SL BWP, frequency domain positions and/or the number (i.e., a value of N) of the N S-SSB frequency domain resources are configured by the network or pre-configured.

As an example, in a case where the plurality of (e.g., N) S-SSB frequency domain resources are distributed continuously, the frequency domain positions of the plurality of S-SSB frequency domain resources may be determined based on a starting position of an initial S-SSB frequency domain resource and a total length of the plurality of S-SSB frequency domain resources. That is, when the starting position of the initial S-SSB frequency domain resource and the total length of all S-SSB frequency domain resources are determined, the frequency domain positions of the plurality of continuously distributed S-SSB frequency domain resources may be determined.

As another example, in a case where the plurality of (e.g., N) S-SSB frequency domain resources are distributed discontinuously, the frequency domain positions of the plurality of S-SSB frequency domain resources may be determined based on a starting position and a length of each of the S-SSB frequency domain resources. That is, when the starting position and the length of each of the S-SSB frequency domain resources are determined, the frequency domain positions of the plurality of the discontinuously distributed S-SSB frequency domain resources may be determined.

As yet another example, in a case where the plurality of (e.g., N) S-SSB frequency domain resources are distributed discontinuously, the frequency domain positions of the plurality of S-SSB frequency domain resources may be determined based on the starting position of the initial S-SSB frequency domain resource, the total length of the plurality of S-SSB frequency domain resources, and an interval between any adjacent S-SSB frequency domain resources. That is, when the starting position of the initial S-SSB frequency domain resource, the total length of the plurality of S-SSB frequency domain resources, and the interval between adjacent S-SSB frequency domain resources are determined, the frequency domain positions of the plurality of discontinuously distributed S-SSB frequency domain resources may be determined. The total length of the plurality of S-SSB frequency domain resources may refer to a length between a starting position of the initial S-SSB frequency domain resource and an ending position of a last S-SSB frequency domain resource among the plurality of S-SSB frequency domain resources, or may also refer to a sum of lengths of each of the plurality of S-SSB frequency domain resources.

Exemplarily, an interval between any two adjacent S-SSB frequency domain resources may be indicated by, for example, the number of sub-channels or resource blocks separating them. For example, the interval between two adjacent S-SSB frequency domain resources is G, meaning that the interval between two adjacent S-SSB frequency domain resources includes G sub-channels or G resource blocks. G is an integer greater than or equal to 0. For example, when G>0, the interval between two adjacent S-SSB frequency domain resources is G sub-channels or G resource blocks. When G=0, there is no interval between two adjacent S-SSB frequency domain resources or the interval is 0, that is, the two adjacent S-SSB frequency domain resources are continuous in the frequency domain.

It is to be noted that the "frequency domain position" of the S-SSB frequency domain resource mentioned in the embodiments of the present disclosure may be abbreviated as "position" in some scenarios. Alternatively, the "position" of the S-SSB frequency domain resource mentioned in the embodiments of the present disclosure, without causing ambiguity, refers to "frequency domain position" of the S-SSB frequency domain resource. For example, the above starting position of the S-SSB frequency domain resource refers to a starting frequency domain position of the S-SSB frequency domain resource.

In some embodiments, the number of the plurality of S-SSB frequency domain resources in the above SL BWP is the number of repetitions of one S-SSB within the SL BWP. For example, if the number of repetitions of one S-SSB in the SL BWP is N, the number of the plurality of S-SSB frequency domain resources in the SL BWP is N.

It is to be understood that in practical applications, the value of N may be configured to be an integer greater than or equal to 1, that is, the system may support that the SL BWP includes at least one S-SSB frequency domain resource. The configuration of $N_1$ may satisfy a condition: $1 \leq N_1 \leq N$, that is, the first frequency domain resource may be configured as part of the system frequency domain resource to accommodate the reduced-capability terminals (i.e., implementation #1), or the first frequency domain resource may be configured as all of the frequency domain resource in the system frequency domain resource.

In a second implementation (referred to as implementation #2), the system frequency domain resource includes a plurality of sub-bandwidths within an SL BWP, and at least one of the plurality of sub-bandwidths contains S-SSB frequency domain resources; and the first frequency domain resource is part of sub-bandwidths in the plurality of sub-bandwidths, and the part of sub-bandwidths contains S-SSB frequency domain resources.

For example, assuming that that the system supports one SL BWP and supports K (K is greater than 1) sub-bandwidths in the SL BWP, or that the system frequency domain resource includes K sub-bandwidths in one SL BWP, then the first frequency domain resource may be, for example, $K_1$ ($K_1 < K$) sub-bandwidths in the K sub-bandwidths. A value of $K_1$ may be determined by definition, pre-configuration, or a configuration from the network, and the S-SSB frequency domain resources are configured in the $K_1$ sub-bandwidths.

In some embodiments, for each sub-bandwidth within the part of sub-bandwidths (for example, the above $K_1$ sub-bandwidths), a frequency domain resource for sending of the S-SSB may include: all or part of S-SSB frequency domain resources within the sub-bandwidth.

For example, assuming that the part of sub-bandwidths includes sub-bandwidth #1, then a frequency domain resource for sending of the S-SSB in sub-bandwidth #1 may include all or part of S-SSB frequency domain resources within the sub-bandwidth #1. When the frequency domain resource for sending of the S-SSB includes all S-SSB frequency domain resources in the sub-bandwidth #1, it indicates that the terminal needs to occupy all the S-SSB frequency domain resources in the sub-bandwidth #1 to send the S-SSB. When the frequency domain resource for sending of the S-SSB includes part of the S-SSB frequency domain resources in the sub-bandwidth #1, it indicates that the terminal may not need to occupy all the S-SSB frequency domain resources in the sub-bandwidth #1 to send the S-SSB.

As an example, whether the terminal needs to occupy all the S-SSB frequency domain resources in a sub-bandwidth for sending of S-SSB may be determined based on a configuration of the network. For example, when the network configures that the terminal must occupy all the S-SSB frequency domain resources in the sub-bandwidth to send the S-SSB, the terminal may send the S-SSB on all the S-SSB frequency domain resources in the sub-bandwidth based on the configuration of the network. As another example, the terminal may autonomously determine whether all S-SSB frequency domain resources in the sub-bandwidth are occupied for sending the S-SSB. For example, when the terminal is capable of supporting to occupy all S-SSB frequency domain resources in the sub-bandwidth to send the S-SSB, the terminal may send the S-SSB on all S-SSB frequency domain resources in the sub-bandwidth. As yet another example, the sending terminal may determine whether all the S-SSB frequency domain resources in the sub-bandwidth are occupied to send the S-SSB based on an instruction from another terminal in the communication system. For example, reduced-capability terminals in the communication system may instruct the sending terminal to occupy all the S-SSB frequency domain resources in the sub-bandwidth to send the S-SSB, so as to simplify the complexity in detection of S-SSB by the reduced-capability terminals, and in this case, the sending terminal may send the S-SSB on all the S-SSB frequency domain resources in the sub-bandwidth.

In some embodiments, respective sub-bandwidths within the part of sub-bandwidths (such as the above $K_1$ sub-bandwidths) are adjacent in a frequency domain; or respective sub-bandwidths within the part of sub-bandwidths are not adjacent in the frequency domain; or a subset of the part of sub-bandwidths are adjacent in the frequency domain.

That is, when the terminal sends the S-SSB on the part of sub-bandwidths, respective sub-bandwidths within the part of sub-bandwidths may be adjacent in the frequency domain, so that frequency domain resources for sending the S-SSB are distributed relatively uniformly, and a transmit power in the frequency domain is also even relatively, which is beneficial to avoid influence on communication performance. In some embodiments, respective sub-bandwidths within the part of sub-bandwidths are not adjacent in the frequency domain, or may also be partially adjacent and partially non-adjacent.

In some embodiments, in sub-bandwidths containing S-SSB frequency domain resources, frequency domain positions and/or the number of S-SSB frequency domain resources contained in each of the sub-bandwidths are configured by the network or pre-configured.

For example, assuming that in the above K sub-bandwidths, $K_2$ sub-bandwidths contain (i.e., being configured with) S-SSB frequency domain resources. In this scenario, the frequency domain positions and/or the number of S-SSB frequency domain resources contained in each of the $K_2$ sub-bandwidths may be configured by the network or pre-configured.

As an example, in sub-bandwidths (e.g. in the above $K_2$ sub-bandwidths) containing S-SSB frequency domain resources, when the S-SSB frequency domain resources are distributed continuously, frequency domain positions of S-SSB frequency domain resources contained in each of the sub-bandwidths are determined based on a starting position of an initial S-SSB frequency domain resource within the sub-bandwidth and a total length of the S-SSB frequency domain resources within the sub-bandwidth. That is, when the starting position of the initial S-SSB frequency domain resource in a certain sub-bandwidth and the total length of all S-SSB frequency domain resources in the sub-bandwidth are determined, frequency domain positions of continuously distributed S-SSB frequency domain resources in the sub-bandwidth may be determined.

As another example, in sub-bandwidths (e.g. in the above $K_2$ sub-bandwidths) containing S-SSB frequency domain resources, when the S-SSB frequency domain resources are distributed discontinuously, the frequency domain positions of the S-SSB frequency domain resources contained in each of the sub-bandwidths are determined based on a starting position and a length of each of the S-SSB frequency domain resources within the sub-bandwidth. That is, for each of the S-SSB frequency domain resources in a certain sub-bandwidth, when their starting positions and lengths thereof are determined, the frequency domain positions for each of discontinuously distributed S-SSB frequency domain resources in the sub-bandwidth may be determined.

As yet another example, in sub-bandwidths (e.g. in the above $K_2$ sub-bandwidths) containing S-SSB frequency domain resources, when the S-SSB frequency domain resources are distributed discontinuously, the frequency domain positions of the S-SSB frequency domain resources contained in each of the sub-bandwidths are determined based on the starting position of the initial S-SSB frequency domain resource within the sub-bandwidth, the total length of the S-SSB frequency domain resources within the sub-bandwidth, and an interval between adjacent S-SSB frequency domain resources within the sub-bandwidth. That is, when the starting position of the initial S-SSB frequency domain resource in a certain sub-bandwidth, the total length of S-SSB frequency domain resources in the sub-bandwidth, and the interval between adjacent S-SSB frequency domain resources in the sub-bandwidth are determined, the frequency domain positions of the each of discontinuously distributed S-SSB frequency domain resources in the sub-bandwidth may be determined. The total length of the S-SSB frequency domain resources in the sub-bandwidth may refer to a length between a starting position of the initial S-SSB frequency domain resource and an ending position of a last S-SSB frequency domain resource in the sub-bandwidth, or may also refer to a sum of lengths of each S-SSB frequency domain resource in the sub-bandwidth.

Exemplarily, an interval between two adjacent S-SSB frequency domain resources may be indicated by, for example, the number of sub-channels or resource blocks separating them. For example, the interval between two adjacent S-SSB frequency domain resources is G, meaning that the interval between the two adjacent S-SSB frequency domain resources is G sub-channels or G resource blocks. G is an integer greater than or equal to 0.

In some embodiments, in sub-bandwidths (e.g. in the above $K_2$ sub-bandwidths) containing S-SSB frequency domain resources, frequency domain positions of S-SSB frequency domain resources contained in each of the sub-bandwidths may be, for example, independently configured or pre-configured.

In some embodiments, in sub-bandwidths (e.g. in the above $K_2$ sub-bandwidths) containing S-SSB frequency domain resources, the number of S-SSB frequency domain resources contained in each of the sub-bandwidths is the number of repetitions of one S-SSB within the sub-bandwidth. For example, if the number of repetitions of one S-SSB in a certain sub-bandwidth is M, the number of S-SSB frequency domain resources in the sub-bandwidth is M. In some embodiments, the number of S-SSB frequency domain resources included in each sub-bandwidth may be, for example, independently configured or pre-configured, and numbers of S-SSB frequency domain resources contained in different sub-bandwidths may be the same or different.

In some embodiments, the above sub-bandwidth may be a resource block (RB) set, a channel, a frequency range, or a resource pool (i.e., frequency domain resource pool). In other words, the sub-bandwidth in the embodiments of the present disclosure may also be referred to as (or replaced with) a resource block set, a channel, a frequency range, or a resource pool.

Exemplarily, when the sub-bandwidth is the frequency range or the resource pool, the plurality of sub-bandwidths (i.e., the plurality of sub-bandwidths included in the system frequency domain resource) within the above SL BWP may overlap or do not overlap in the frequency domain. When the sub-bandwidth is the RB set or the channel, the plurality of sub-bandwidths within the above SL BWP do not overlap in the frequency domain.

It is to be understood that in practical applications, the value of above K may be configured to be an integer greater than or equal to 1, that is, the system may support that the above SL BWP includes at least one sub-bandwidth. The configuration of $K_1$ may satisfy a condition: $1 \leq K_1 \leq K$, that is, the first frequency domain resource may be configured as part of the system frequency domain resource to accommodate the reduced-capability terminals (i.e., implementation #2), or the first frequency domain resource may be configured as all of the frequency domain resource in the system frequency domain resource.

In a third implementation (referred to as implementation #3), the system frequency domain resource includes a plurality of SL BWPs, and at least one of the plurality of SL BWPs contains S-SSB frequency domain resources; and the first frequency domain resource is part of SL BWPs in the plurality of SL BWPs, and the part of SL BWPs contains S-SSB frequency domain resources.

For example, assuming that the system supports X (X is greater than 1) SL BWPs or that the system frequency domain resource includes X SL BWPs, then the first frequency domain resource may be, for example, $X_1$ ($X_1 < X$) SL BWPs in the X SL BWPs. A value of $X_1$ may be determined, for example, by definition, pre-configuration or a configuration from the network, and the S-SSB frequency domain resources are configured in the $X_1$ sub-bandwidths.

In some embodiments, for each SL BWP within the part of SL BWPs (such as the above $X_1$ SL BWPs), a frequency domain resource for sending of the S-SSB may include: all or part of S-SSB frequency domain resources within the SL BWP.

For example, assuming that the part of SL BWPs includes SL BWP #1, a frequency domain resource in the SL BWP #1 for sending of the S-SSB may include all or part of the S-SSB frequency domain resources in the SL BWP #1. When the frequency domain resource for sending of the S-SSB includes all the S-SSB frequency domain resources in the SL BWP #1, it indicates that the terminal needs to occupy all the S-SSB frequency domain resources within the SL BWP #1 to send the S-SSB. When the frequency domain resource for sending of the S-SSB includes part of the S-SSB frequency domain resources within the SL BWP #1, it indicates that the terminal does not need to occupy all the S-SSB frequency domain resources within the SL BWP #1 to send the S-SSB.

As an example, whether the terminal needs to occupy all S-SSB frequency domain resources within the SL BWP for sending of S-SSB may be determined based on the configuration from the network. As another example, the terminal may autonomously determine whether to occupy all S-SSB frequency domain resources within the SL BWP for sending of S-SSB. As yet another example, the sending terminal may determine whether all S-SSB frequency domain resources within the SL BWP are occupied for sending of S-SSB based on an instruction from another terminal in the communication system. For example, a reduced-capability terminal in the communication system may indicate the sending terminal to occupy all S-SSB frequency domain resources in the SL BWP to send the S-SSB, so as to simplify the complexity in detection of S-SSB by the reduced-capability terminal, and in this case, the sending terminal may send the S-SSB on all S-SSB frequency domain resources in the SL BWP.

In some embodiments, respective SL BWPs within the part of SL BWPs (such as the above $X_1$ SL BWPs) are adjacent in a frequency domain; or respective SL BWPs within the part of SL BWPs are not adjacent in the frequency domain; or a subset of the part of SL BWPs are adjacent in the frequency domain.

That is, when the terminal sends the S-SSB on the part of SL BWPs, respective SL BWPs within the part of SL BWPs may be adjacent in the frequency domain, so that frequency domain resources for sending the S-SSB are distributed relatively uniformly, and a transmit power in the frequency domain is also even relatively, which is beneficial to avoid influence on communication performance. In some embodiments, respective SL BWPs within the part of SL BWPs are not adjacent in the frequency domain, or may also be partially adjacent and partially non-adjacent.

In some embodiments, in SL BWPs containing S-SSB frequency domain resources, frequency domain positions and/or a number of S-SSB frequency domain resources contained in each of the SL BWPs are configured by the network or pre-configured.

For example, assuming that in the above X SL BWPs, $X_2$ SL BWPs contain (i.e., configured with) S-SSB frequency domain resources. In this scenario, the frequency domain positions and/or the number of S-SSB frequency domain resources contained in each of the $X_2$ SL BWPs may be configured by the network or pre-configured.

As an example, in SL BWPs (e.g. in the above $X_2$ SL BWPs) containing S-SSB frequency domain resources, when the S-SSB frequency domain resources are distributed continuously, frequency domain positions of S-SSB frequency domain resources contained in each of the SL BWPs are determined based on a starting position of an initial S-SSB frequency domain resource within the SL BWP and a total length of the S-SSB frequency domain resources within the SL BWP. That is, when the starting position of the initial S-SSB frequency domain resource in a certain SL BWP and the total length of all S-SSB frequency domain resources in the SL BWP are determined, frequency domain positions of continuously distributed S-SSB frequency domain resources in the SL BWP may be determined.

As another example, in SL BWPs (e.g. in the above $X_2$ SL BWPs) containing S-SSB frequency domain resources, when the S-SSB frequency domain resources are distributed discontinuously, frequency domain positions of S-SSB frequency domain resources contained in each of the SL BWPs are determined based on a starting position and a length of each of S-SSB frequency domain resources within the SL BWP. That is, when the starting position and the length of each of the S-SSB frequency domain resources in a certain SL BWP are determined, the frequency domain positions of each of discontinuously distributed S-SSB frequency domain resources in the SL BWP may be determined.

As yet another example, in SL BWPs (e.g. in the above $X_2$ SL BWPs) containing S-SSB frequency domain resources, when the S-SSB frequency domain resources are distributed discontinuously, the frequency domain positions of the S-SSB frequency domain resources contained in each of the SL BWPs are determined based on the starting position of the initial S-SSB frequency domain resource within the SL BWP, the total length of the S-SSB frequency domain resources within the SL BWP, and an interval between adjacent S-SSB frequency domain resources within the SL BWP. That is, when the starting position of the initial S-SSB frequency domain resource in a certain SL BWP, the total length of S-SSB frequency domain resources in the SL BWP, and the interval between adjacent S-SSB frequency domain resources in the SL BWP are determined, the frequency domain positions of the each of discontinuously distributed S-SSB frequency domain resources in the SL BWP may be determined. The total length of the S-SSB frequency domain resources in the SL BWP may refer to a length between a starting position of the initial S-SSB frequency domain resource and an ending position of a last S-SSB frequency domain resource in the SL BWP, or may also refer to a sum of lengths of respective S-SSB frequency domain resource in the SL BWP.

Exemplarily, an interval between two adjacent S-SSB frequency domain resources may be indicated by, for example, the number of sub-channels or resource blocks separating them. For example, the interval between two adjacent S-SSB frequency domain resources is G, meaning that the interval between the two adjacent S-SSB frequency domain resources is G sub-channels or G resource blocks. G is an integer greater than or equal to 0.

In some embodiments, in SL BWPs (e.g. in the above $X_2$ SL BWPs) containing S-SSB frequency domain resources, frequency domain positions of S-SSB frequency domain resources contained in each of the SL BWPs may be, for example, independently configured or pre-configured.

In some embodiments, in SL BWPs (e.g. in the above $X_2$ SL BWPs) containing S-SSB frequency domain resources, the number of S-SSB frequency domain resources contained in each of the SL BWPs is the number of repetitions of one S-SSB within the SL BWP. For example, if the number of repetitions of one S-SSB in a certain SL BWP is N, the number of the S-SSB frequency domain resources in the SL BWP is N. In some embodiments, the number of S-SSB frequency domain resources included in each SL BWP may be, for example, independently configured or pre-configured, and numbers of S-SSB frequency domain resources contained in different SL BWPs may be the same or different.

It is to be understood that in practical applications, the configuration of the above $X_1$ may satisfy a condition: $1 \leq X_1 \leq X$, that is, the first frequency domain resource may be configured as part of the system frequency domain resource to accommodate the reduced-capability terminals (i.e., implementation #3), or the first frequency domain resource may be configured as all of the frequency domain resource in the system frequency domain resource.

In a fourth implementation (referred to as implementation #4), the system frequency domain resource includes a plurality of carriers, and at least one of the plurality of carriers contains S-SSB frequency domain resources; and the first frequency domain resource is part of carriers in the plurality of carriers, and the part of carriers contains S-SSB frequency domain resources.

For example, assuming that the system supports Y (Y is greater than 1) carriers or that the system frequency domain resource includes Y carriers, then the first frequency domain resource may be, for example, $Y_1$ ($Y_1 < Y$) carriers in the Y carriers. A value of $Y_1$ may be determined, for example, by definition, pre-configuration or a configuration from the network, and the S-SSB frequency domain resources are configured in the $Y_1$ carriers.

In some embodiments, for each carrier within the part of carriers (such as the above $Y_1$ carriers), a frequency domain resource for sending of the S-SSB may include: all or part of S-SSB frequency domain resources within the carrier.

For example, assuming that the part of carriers includes carrier #1, a frequency domain resource for sending of the S-SSB in carrier #1 may include all or part of S-SSB frequency domain resources within the carrier #1. When the frequency domain resource for sending of the S-SSB includes all S-SSB frequency domain resources in the carrier #1, it indicates that the terminal needs to occupy all the S-SSB frequency domain resources in the carrier #1 to send the S-SSB. When the frequency domain resource for sending of the S-SSB includes part of the S-SSB frequency domain resources in the carrier #1, it indicates that the terminal may not need to occupy all the S-SSB frequency domain resources in the carrier #1 to send the S-SSB.

As an example, whether the terminal needs to occupy all S-SSB frequency domain resources within the carrier for sending of S-SSB may be determined based on the configuration from the network. As another example, the terminal may autonomously determine whether to occupy all S-SSB frequency domain resources within the carrier for sending of S-SSB. As yet another example, the sending terminal may also determine whether all S-SSB frequency domain resources within the carrier are occupied for sending of S-SSB based on an instruction from another terminal in the communication system. For example, a reduced-capability terminal in the communication system may indicate the sending terminal to occupy all S-SSB frequency domain resources in the carrier to send the S-SSB, so as to simplify the complexity in detection of S-SSB by the reduced-capability terminal, and in this case, the sending terminal may send the S-SSB on all S-SSB frequency domain resources in the carrier.

In some embodiments, respective carriers within the part of carriers (such as the above $Y_1$ carriers) are adjacent in a frequency domain; or respective carriers within the part of carriers are not adjacent in the frequency domain; or a subset of the part of carriers are adjacent in the frequency domain.

That is, when the terminal sends the S-SSB on the part of carriers, respective carriers within the part of carriers may be adjacent in the frequency domain, so that frequency domain resources for sending the S-SSB are distributed relatively uniformly, and a transmit power in the frequency domain is also even relatively, which is beneficial to avoid influence on communication performance. In some embodiments, respective carriers within the part of carriers are not adjacent in the frequency domain, or may also be partially adjacent and partially non-adjacent.

In some embodiments, in carriers containing S-SSB frequency domain resources, frequency domain positions and/or the number of S-SSB frequency domain resources contained in each of the carriers are configured by the network or pre-configured.

For example, assuming that in the above Y carriers, $Y_2$ carriers contain (i.e., configured with) S-SSB frequency domain resources. In this scenario, the frequency domain positions and/or the number of S-SSB frequency domain resources contained in each of the $Y_2$ carriers may be configured by the network or pre-configured.

As an example, in carriers (e.g. in the above $Y_2$ carriers) containing S-SSB frequency domain resources, when the S-SSB frequency domain resources are distributed continuously, frequency domain positions of S-SSB frequency domain resources contained in each of the carriers are determined based on a starting position of an initial S-SSB frequency domain resource within the carrier and a total length of the S-SSB frequency domain resources within the carrier. That is, when the starting position of the initial S-SSB frequency domain resource in a certain carrier and the total length of all S-SSB frequency domain resources in the carrier are determined, frequency domain positions of continuously distributed S-SSB frequency domain resources in the carrier may be determined.

As another example, in carriers (e.g. in the above $Y_2$ carriers) containing S-SSB frequency domain resources, when the S-SSB frequency domain resources are distributed discontinuously, frequency domain positions of S-SSB frequency domain resources contained in each of the carriers are determined based on a starting position and a length of each of S-SSB frequency domain resources within the carrier. That is, when the starting position and the length of each of the S-SSB frequency domain resources in a certain carrier are determined, the frequency domain positions of each of the discontinuously distributed S-SSB frequency domain resources in the carrier may be determined.

As yet another example, in carriers (e.g. in the above $Y_2$ carriers) containing S-SSB frequency domain resources, when the S-SSB frequency domain resources are distributed discontinuously, the frequency domain positions of the S-SSB frequency domain resources contained in each of the carriers are determined based on the starting position of the initial S-SSB frequency domain resource within the carrier, the total length of the S-SSB frequency domain resources within the carrier, and an interval between adjacent S-SSB frequency domain resources within the carrier. That is, when the starting position of the initial S-SSB frequency domain resource in a certain carrier, the total length of S-SSB frequency domain resources in the carrier, and the interval between adjacent S-SSB frequency domain resources in the carrier are determined, the frequency domain positions of the each of the discontinuously distributed S-SSB frequency domain resources in the carrier may be determined. The total length of the S-SSB frequency domain resources in the carrier may refer to a length between a starting position of the initial S-SSB frequency domain resource and an ending position of a last S-SSB frequency domain resource in the carrier, or may also refer to a sum of lengths of respective S-SSB frequency domain resources in the carrier.

Exemplarily, an interval between two adjacent S-SSB frequency domain resources may be indicated by, for example, the number of sub-channels or resource blocks separated by two adjacent S-SSB frequency domain resources. For example, the interval between two adjacent S-SSB frequency domain resources is G, meaning that the interval between the two adjacent S-SSB frequency domain resources is G sub-channels or G resource blocks. G is an integer greater than or equal to 0.

In some embodiments, in carriers (e.g. in the above $Y_2$ carriers) containing S-SSB frequency domain resources, frequency domain positions of S-SSB frequency domain resources contained in each of the carriers may be, for example, independently configured or preconfigured.

In some embodiments, in carriers (e.g. in the above $Y_2$ carriers) containing S-SSB frequency domain resources, the number of S-SSB frequency domain resources contained in each of the carriers is the number of repetitions of one S-SSB within the carrier. For example, if the number of repetitions of one S-SSB in a certain carrier is U, the number of the S-SSB frequency domain resources in the carrier is U. In some embodiments, the number of S-SSB frequency domain resources included in each carrier may be, for example, independently configured or pre-configured, and numbers of S-SSB frequency domain resources contained in different carriers may be the same or different.

It is to be understood that in practical applications, the configuration of the above $Y_1$ may satisfy a condition: $1 \leq Y_1 \leq Y$, that is, the first frequency domain resource may be configured as part of the system frequency domain resource to accommodate the reduced-capability terminal (i.e., implementation #4), or the first frequency domain resource may be configured as all of the frequency domain resource in the system frequency domain resource.

It is also to be understood that the carriers described above may be applied to scenarios involving Carrier Aggregation (CA). The "carrier" may also be referred to as, for example, a "subcarrier" or a "Carrier Component (CC)".

In some embodiments, the system frequency domain resource may further include a second frequency domain resource, and the second frequency domain resource is a frequency domain resource other than the first frequency domain resource within the system frequency domain resource. The second frequency domain resource is used for sending or receiving of service data.

As an example, in implementation #1, it is assumed that the system frequency domain resource includes the number N of S-SSB frequency domain resources in one SL BWP, then in the implementation, if the first frequency domain resource is $N_1$ ($N_1$<N) S-SSB frequency domain resources in the N S-SSB frequency domain resources, the second frequency domain resource may be the remaining N-$N_1$ S-SSB frequency domain resources excluding the $N_1$S-SSB frequency domain resources in the N S-SSB frequency domain resources.

As another example, in implementation #2, it is assumed that the system frequency domain resource includes K sub-bandwidths in one SL BWP, then in the implementation, if the first frequency domain resource is $K_1$ ($K_1$<K) sub-bandwidths in the K sub-bandwidths, the second frequency domain resource may be the remaining K-$K_1$ sub-bandwidths excluding the $K_1$ sub-bandwidths in the K sub-bandwidths.

As yet another example, in implementation #3, it is assumed that the system frequency domain resource includes X SL BWPs, then in the implementation, if the first frequency domain resource is $X_1$ ($X_1$<X) SL BWPs in the X SL BWPs, the second frequency domain resource may be the remaining X-$X_1$ SL BWPs excluding the $X_1$SL BWPs in the X SL BWPs.

As still another example, in implementation #4, it is assumed that the system frequency domain resource includes Y carriers, then in the implementation, if the first frequency domain resource is $Y_1$ ($Y_1$<Y) carriers in the Y carriers, the second frequency domain resource may be the remaining Y-$Y_1$ carriers out of the $Y_1$ carriers in the Y carriers.

According to the method of the embodiments in the present disclosure, the terminal may use the first frequency domain resource for sending/receiving of S-SSB and use the second frequency domain resource for sending/receiving of service data, so that the sending/receiving of the S-SSB may be limited to a narrower bandwidth, thereby facilitating more efficient use of the frequency domain resource. For example, in implementation #3, the second type of terminals (i.e., reduced-capability terminals) may use the SL BWP corresponding to the first frequency domain resource for sending/receiving of S-SSB and use the SL BWP corresponding to the second frequency domain resource for sending/receiving of service data by switching the SL BWP, so that the problem of coexistence of the second type of terminals and the first type of terminals in the same communication system can be solved while achieving efficient utilization of frequency domain resources.

In some embodiments, the second frequency domain resource does not include the S-SSB frequency domain resource, or other than the first frequency domain resource, no other frequency domain resources may be configured with the S-SSB frequency domain resource, so that the second frequency domain resource can be better used for communication of service data.

In some embodiments, when the terminal is capable of sending or receiving the S-SSB on the second frequency domain resource, the second frequency domain resource may be used for sending or receiving of the S-SSB.

That is, if a certain terminal (such as a certain first type of terminal) is capable of sending or receiving the S-SSB on the second frequency domain resource, the terminal may not only send or receive the S-SSB on the first frequency domain resource, but also on the second frequency domain resource.

According to the method of the embodiments of the present disclosure, on the one hand, by using part of the system frequency domain resources to send or receive the S-SSB, it is enabled that the transmission or reception of the S-SSB is performed on a relatively narrower bandwidth, so that terminals with different capabilities in the same communication system can be accommodated to ensure that all terminals in the communication system can realize synchronization. On the other hand, in addition to defining, pre-configuring, or network-configuring common frequency domain resources (i.e., first frequency domain resource) for sending/receiving the S-SSB, additional frequency domain resources (i.e., second frequency domain resources) for sending/receiving the S-SSB may be defined, pre-configured, or configured by the network as a supplement to prevent the terminals from being unable to send the S-SSB due to LBT failure in some frequency band resources.

The sidelink synchronization method provided by the embodiments of the present disclosure has been described above with reference to FIG. 17. In order to facilitate understanding of the embodiments of the present disclosure, several possible implementation schemes of the sidelink synchronization method applicable to the embodiments of the present disclosure are described below.

As an example, frequency domain resource design schemes of the S-SSB may include the following first scheme to fourth scheme.

In a first scheme, one SL BWP includes N (N is greater than or equal to 1) S-SSB frequency domain resources.

In a second scheme, one SL BWP includes K (K is greater than or equal to 1) sub-bandwidths, and in the K sub-bandwidths, at least one sub-bandwidth includes M (M is greater than or equal to 1) S-SSB frequency domain resources.

Exemplarily, the above sub-bandwidth may also be referred to as (or defined as) a RB set, a Channel, a Frequency Range (FR), or a resource pool (i.e., frequency domain resource pool).

In a possible manner, the number of S-SSB frequency domain resources included in each sub-bandwidth is independently configured or pre-configured. That is, numbers of S-SSB frequency domain resources contained in different sub-bandwidths may be the same or different, which is not limited in the present disclosure.

In a third scheme, there are X (X is greater than 1) SL BWPs in the frequency domain, and in the X SL BWPs, at least one SL BWP includes L (L is greater than or equal to 1) S-SSB frequency domain resources.

In a possible manner, the number of S-SSB frequency domain resources included in different SL BWPs is independently configured or pre-configured. That is, numbers of S-SSB frequency domain resources contained in different SL BWPs may be the same or different, which is not limited in the present disclosure.

In a fourth scheme, there are Y (Y is greater than 1) carriers in the frequency domain, and in the Y carriers, at least one carrier contains U (U is greater than or equal to 1) S-SSB frequency domain resources.

In a possible manner, the number of S-SSB frequency domain resources included in different carriers is independently configured or pre-configured. That is, numbers of S-SSB frequency domain resources contained in different carriers may be the same or different, which is not limited in the present disclosure.

Exemplarily, the carriers described above may be applied to scenarios involving CA. The "carrier" may also be referred to as, for example, a "subcarrier" or a "carrier component".

It is to be noted that the configuration manner for the S-SSB frequency domain resources in the first scheme to the fourth scheme may include, for example, configuring the S-SSB frequency domain resources by the network, or configuring the S-SSB frequency domain resources through pre-configuration.

Configurations for the number N/M/L/U of S-SSB frequency domain resources may include configurations for the positions and number (i.e., N/M/L/U) of the N/M/L/U S-SSB frequency domain resources.

Exemplarily, the positions of the S-SSB frequency domain resources may be indicated, for example, by the following manner 1, manner 2, or manner 3.

In manner 1, in a case where the plurality of S-SSB frequency domain resources are distributed continuously, a starting position of an initial S-SSB frequency domain resource and a total length of the plurality of S-SSB frequency domain resources are indicated. That is, based on the starting position of the initial S-SSB frequency domain resource and the total length of the plurality of S-SSB frequency domain resources, the positions of the plurality of continuously distributed S-SSB frequency domain resources may be determined.

In manner 2, in a case where the plurality of S-SSB frequency domain resources are distributed discontinuously, a starting position and a length of each of the S-SSB frequency domain resources are indicated. That is, based on the starting position and the length of each of the S-SSB frequency domain resources, the positions of the plurality of discontinuously distributed S-SSB frequency domain resources may be determined.

In manner 3, in a case where the plurality of S-SSB frequency domain resources are distributed discontinuously, a starting position of an initial S-SSB frequency domain resource, a total length of the plurality of S-SSB frequency domain resources and an interval G between adjacent S-SSB frequency domain resources are indicated. That is, based on the starting position of the initial S-SSB frequency domain resource, the total length of the plurality of S-SSB frequency domain resources, and the interval G between adjacent S-SSB frequency domain resources, the positions of the plurality of discontinuously distributed S-SSB frequency domain resources may be determined.

Exemplarily, the above interval G may refer to an interval of G sub-channels, or may also refer to an interval of G resource blocks. G is an integer greater than or equal to 0. For example, when G>0, the interval between two adjacent S-SSB frequency domain resources is G sub-channels or G resource blocks. When G=0, there is no interval between two adjacent S-SSB frequency domain resources or the interval is 0, that is, the two adjacent S-SSB frequency domain resources are continuous in the frequency domain.

Exemplarily, the number (i.e., quantity) of the S-SSB frequency domain resources is the number of repetitions of one S-SSB in the frequency domain. For example, if the number of repetitions of one S-SSB in the frequency domain is N, the number of S-SSB frequency domain resources is N.

As an example, a sending terminal of the S-SSB may send the S-SSB in the frequency domain through the following sending manner 1 to sending manner 4.

Sending manner 1:

The sending manner may be applied, for example, to the frequency domain resource design scheme in the above first scheme.

Exemplarily, for the number N of S-SSB frequency domain resources in the first scheme, the terminal may send the S-SSB on at least one of the N S-SSB frequency domain resources. For example, in the N S-SSB frequency domain resources, where $N_1 (1 \leq N_1 \leq N)$ S-SSB frequency domain resources must be used to send S-SSB, that is, the terminal needs to send S-SSB on at least in the $N_1$ S-SSB frequency domain resources.

In some embodiments, the terminal may also send S-SSB on at least one of the $(N-N_1)$ S-SSB frequency domain resources in addition to the $N_1$ S-SSB frequency domain resources.

Sending manner 2:

The sending manner may be applied, for example, to the frequency domain resource design scheme in the above second scheme.

Exemplarily, for K sub-bandwidths included in the SL BWP in second scheme, the terminal may send at least one S-SSB on at least one of the K sub-bandwidths. For example, in K sub-bandwidths of the SL BWP, where $K_1 (1 \leq K_1 \leq K)$ sub-bandwidths must be used to send S-SSB, that is, the terminal needs to send S-SSB on at least the $K_1$ sub-bandwidths.

As an implementation, the terminal may send at least one S-SSB on each sub-bandwidth within the $K_1$ sub-bandwidths.

As another implementation, the terminal may occupy all the S-SSB frequency domain resources on each sub-bandwidth within the $K_1$ sub-bandwidths for sending S-SSB. For example, assuming that each of the $K_1$ sub-bandwidths contains the number y1 of S-SSB frequency domain resources. Then, the terminal needs to occupy y1 S-SSB frequency domain resources of each sub-bandwidth for sending S-SSB.

As yet another implementation, the terminal may occupy all the S-SSB frequency domain resources on part of the $K_1$ sub-bandwidths for sending S-SSB, while on another part of the $K_1$ sub-bandwidths, the terminal does not need to occupy all S-SSB frequency domain resources for sending S-SSB.

In some embodiments, the terminal may also send at least one S-SSB on at least one of $(K-K_1)$ sub-bandwidths in addition to the $K_1$ sub-bandwidths.

Exemplarily, when the terminal sends the S-SSB on the plurality of sub-bandwidths, the plurality of sub-bandwidths may be adjacent to each other in the frequency domain, so that frequency domain resources for sending the S-SSB are distributed relatively uniformly, and a transmit power in the frequency domain is also even relatively, which is beneficial to avoid influence on communication performance. In some embodiments, the plurality of sub-bandwidths for sending S-SSB are not adjacent in the frequency domain, or may also be partially adjacent and partially non-adjacent.

Sending manner 3:

The sending manner may be applied, for example, to the frequency domain resource design scheme in the above third scheme.

Exemplarily, for the number X of SL BWPs in the third scheme, the terminal may send at least one S-SSB on at least one of the X SL BWPs. For example, in the X SL BWPs, where $X_1 (1 \leq X_1 \leq X)$ SL BWPs must be used to send S-SSB, that is, the terminal needs to send S-SSB on at least the $X_1$ SL BWPs.

As an implementation, the terminal may send at least one S-SSB on each SL BWP within the $X_1$ SL BWPs.

As another implementation, the terminal may occupy all the S-SSB frequency domain resources in each of the $X_1$ SL BWPs for sending S-SSB. For example, assuming that each of the $X_1$ SL BWPs contains the number $y_2$ of S-SSB frequency domain resources. Then, the terminal needs to occupy $y_2$ S-SSB frequency domain resources of each SL BWP for sending S-SSB.

As yet another implementation, the terminal may occupy all the S-SSB frequency domain resources in part of the $X_1$ SL BWPs for sending S-SSB, while in another part of the $X_1$ SL BWPs, the terminal does not need to occupy all S-SSB frequency domain resources for sending S-SSB.

In some embodiments, the terminal may also send at least one S-SSB in at least one of $(X-X_1)$ SL BWPs in addition to the $X_1$ SL BWPs.

Exemplarily, when the terminal sends the S-SSB in the plurality of SL BWPs, the plurality of SL BWPs may be adjacent in the frequency domain, so that frequency domain resources for sending the S-SSB are distributed relatively uniformly, and a transmit power in the frequency domain is also even relatively, which is beneficial to avoid influence on communication performance. In some embodiments, the plurality of SL BWPs for sending S-SSB are not adjacent in the frequency domain, or may also be partially adjacent and partially non-adjacent.

Sending manner 4:

The sending manner may be applied, for example, to the frequency domain resource design scheme in the above fourth scheme.

Exemplarily, for Y carriers in the fourth scheme, the terminal may send at least one S-SSB on at least one of the Y carriers. For example, in the Y carriers, where $Y_1$ $(1 \leq Y_1 \leq Y)$ carriers must be used to send S-SSB, that is, the terminal needs to send S-SSB on at least the $Y_1$ carriers.

As an implementation, the terminal may send at least one S-SSB on each carrier within the Y1 carriers.

As another implementation, the terminal may occupy all the S-SSB frequency domain resources on each carrier within the $Y_1$ carriers for sending S-SSB. For example, assuming that each of the $Y_1$ carriers contains the number $y_3$ of S-SSB frequency domain resources. Then, the terminal needs to occupy $y_3$ S-SSB frequency domain resources of each carrier for sending S-SSB.

As yet another implementation, the terminal may occupy all the S-SSB frequency domain resources on part of the $Y_1$ carriers for sending S-SSB, while on another part of the $Y_1$ carriers, the terminal does not need to occupy all S-SSB frequency domain resources for sending S-SSB.

In some embodiments, the terminal may also send at least one S-SSB on at least one of $(Y-Y_1)$ carriers in addition to the $Y_1$ carriers.

Exemplarily, when the terminal sends the S-SSB on the plurality of carriers, the plurality of carriers may be adjacent in the frequency domain, so that frequency domain resources for sending the S-SSB are distributed relatively uniformly, and a transmit power in the frequency domain is also even relatively, which is beneficial to avoid influence on communication performance. In some embodiments, the plurality of carriers for sending S-SSB are not adjacent in the frequency domain, or may also be partially adjacent and partially non-adjacent.

It is to be noted that the S-SSB frequency domain resources that must be used to send S-SSB mentioned in the sending manner 1 to the sending manner 4 may also be understood as default/mandatory frequency domain resources for sending the S-SSB.

It is also to be noted that the terminal in the above sending manner 1 to sending manner 4 may be either the first type of terminal or the second type of terminal.

The first type of terminal refers to a terminal with full capabilities, or a terminal with strong capabilities or a terminal with high capabilities, such as a mobile phone. The second type of terminals refers to reduced-capability terminals, such as smart watches, bracelets, AR/VR glasses, etc. Generally, a bandwidth supported by the second type of terminals for sending/receiving information is relatively narrower, or in other words, the second type of terminals may support sending/receiving information on a sub-bandwidth but cannot support sending/receiving information across the full bandwidth. In addition, in some scenarios, transmit powers of the second type of terminals are also smaller, and their encoding/decoding capabilities may be limited.

When a terminal that sends the S-SSB is the first type of terminal, the terminal needs to send the S-SSB at positions of default/mandatory frequency domain resources for sending the S-SSB. In addition, in some scenarios, such terminals may also send S-SSB on other frequency domain resources. When a terminal that sends the S-SSB is the second type of terminal, the terminal may send the S-SSB only at the positions of the default/mandatory S-SSB frequency domain resources for sending the S-SSB, and it is not required that the terminal sends the S-SSB on other frequency domain resources. In some scenarios, if the second type of terminal is capable of sending the S-SSB on other frequency domain resources, the second type of terminal may also send the S-SSB on frequency domain resources in addition to the default/mandatory S-SSB frequency domain resources.

In a possible manner, the above default/mandatory frequency domain resources for sending the S-SSB may be determined, for example, by definition, configuration or pre-configuration. The default/mandatory frequency domain resources for sending the S-SSB may be used as common frequency domain resources for sending the S-SSB. The common frequency domain resources include, but is not limited to, at least one continuous frequency band in the frequency domain, at least one sub-bandwidth (such as $K_1$ sub-bandwidths in sending manner 2)), at least one continuous frequency domain resource within the SL BWP, at least one resource pool, and at least one SL BWP (such as $X_1$ SL BWPs in sending manner 3) or at least one carrier (e.g. $Y_1$ carriers in sending manner 4).

As an example, a receiving terminal of the S-SSB may receive the S-SSB in the frequency domain through the following receiving manner 1 to receiving manner 4.

Receiving manner 1:

The receiving manner, corresponding to sending manner 1, may be applied, for example, to the frequency domain resource design scheme in the above first scheme.

Exemplarily, the terminal may detect/receive S-SSB at positions of $N_1$ S-SSB frequency domain resources (i.e., positions of default/mandatory frequency domain resources) in sending manner 1. In some embodiments, the terminal may also detect/receive the S-SSB at positions of other frequency domain resources.

Receiving manner 2:

The receiving manner, corresponding to sending manner 2, may be applied, for example, to the frequency domain resource design scheme in the above second scheme.

Exemplarily, the terminal may detect/receive S-SSB at $K_1$ sub-bandwidths (i.e., positions of default/mandatory frequency domain resources) in sending manner 2. In some embodiments, the terminal may also detect/receive the S-SSB at other sub-bandwidths.

Receiving manner 3:

The receiving manner, corresponding to sending manner 3, may be applied, for example, to the frequency domain resource design scheme in the above third scheme.

Exemplarily, the terminal may detect/receive S-SSB at $X_1$ SL BWPs (i.e., positions of default/mandatory frequency domain resources) in sending manner 3. In some embodiments, the terminal may also detect/receive the S-SSB at other SL BWPs.

Receiving manner 4:

The receiving manner, corresponding to sending manner 4, may be applied, for example, to the frequency domain resource design scheme in the above fourth scheme.

Exemplarily, the terminal may detect/receive S-SSB at $Y_1$ carriers (i.e., positions of default/mandatory frequency domain resources) in sending manner 4. In some embodiments, the terminal may also detect/receive the S-SSB at other carriers.

It is to be noted that the terminal in the above receiving manner 1 to receiving manner 4 may be either the first type of terminal or the second type of terminal. When a terminal that receives the S-SSB is the first type of terminal or the second type of terminal, the terminal needs to detect/receive the S-SSB at least in positions of default/mandatory frequency domain resources. When the terminal that receives the S-SSB is the first type of terminal, the terminal has full capability, so it can additionally detect/receive the S-SSB at positions of other frequency domain resources. In some scenarios, if the second type of terminal is capable of detecting/receiving the S-SSB on other frequency domain resources, the second type of terminal may also detect/receive the S-SSB on positions of frequency domain resources in addition to the default/-mandatory S-SSB frequency domain resources.

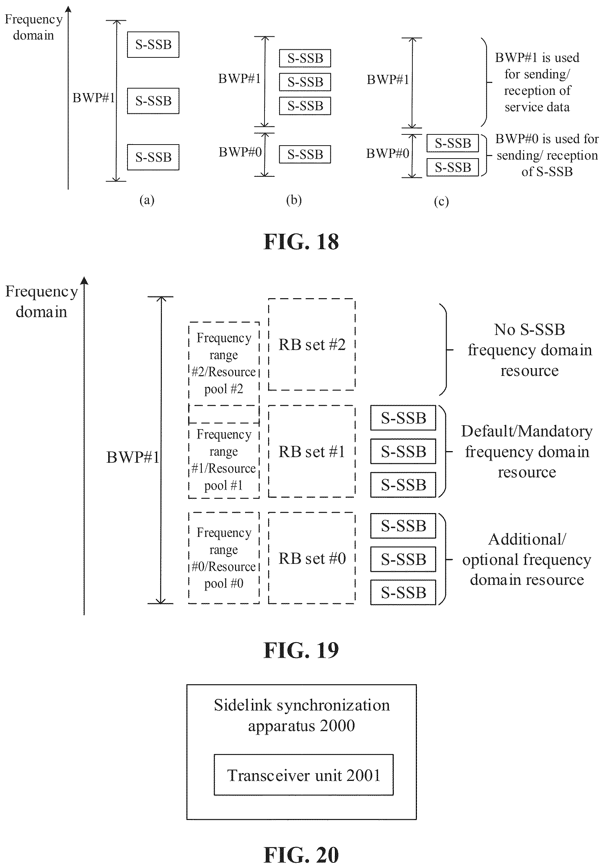

In order to facilitate understanding, a possible implementation flow of the sidelink synchronization method applicable to the embodiments of the present disclosure will be described below with reference to FIG. 18 and FIG. 19.

Figure (a) in FIG. 18 is a schematic diagram of a frequency domain resource design scheme for S-SSB provided by an embodiment of the present disclosure. As illustrated in of figure (a) of FIG. 18, the system supports one BWP (i.e., SL BWP), and supports a plurality of transmission resources in the frequency domain for the S-SSB. In other words, the system frequency domain resource may include a plurality of S-SSB frequency domain resources in one BWP. Intervals between the plurality of S-SSB frequency domain resources may be defined by configuration/pre-configuration.

Taking figure (a) of FIG. 18 as an example, the system frequency domain resource may include three S-SSB frequency domain resources in one BWP, and one or more S-SSB frequency domain resources in the three S-SSB frequency domain resources may be used as default/mandatory frequency domain resources, that is, the sending terminal needs to send S-SSB on at least the one or more frequency domain resources, and the receiving terminal needs to receive S-SSB on at least the one or more frequency domain resources.

For example, if a certain terminal is a first type of terminal, the terminal is capable of sending the S-SSB on frequency domain resources in addition to the default/mandatory frequency domain resources, for example, the terminal may send the S-SSB on all S-SSB frequency domain resources. If a certain terminal is a second type of terminal, the terminal needs to send the S-SSB at least on the default/mandatory S-SSB resources, for example, the terminal may send the S-SSB only on the default/mandatory resources.

For example, if a certain terminal is a first type of terminal, the terminal is capable of receiving the S-SSB on frequency domain resources in addition to the default/mandatory frequency domain resources, for example, the terminal may receive the S-SSB on all S-SSB frequency domain resources. If a certain terminal is a second type of terminal, the terminal needs to receive the S-SSB at least on the default/mandatory frequency domain resources, for example, the terminal may receive the S-SSB only on the default/mandatory resources.

Figure (b) in FIG. 18 is a schematic diagram of another frequency domain resource design scheme for S-SSB provided by an embodiment of the present disclosure. As illustrated in figure (b) of FIG. 1 (b), the system supports two BWPs (i.e., SL BWPs), and S-SSB frequency domain resources are independently configured on each of the two BWPs.

In some scenarios, BWP #0 may be a default/mandatory BWP (i.e., a default/mandatory frequency domain resource). In this scenario, the sending terminal needs to send the S-SSB at least on the BWP #0, and the receiving terminal needs to receive the S-SSB at least on the BWP #0.

In some scenarios, BWP #1 may be used as an additional frequency domain resource. In this scenario, the first type of terminal may select whether to send the S-SSB on the BWP #1, or/and how many S-SSB frequency domain resources are occupied to send the S-SSB. The second type of terminal is usually unable to send/receive S-SSB on BWP #1 due to limited capabilities.

Figure (c) in FIG. 18 is a schematic diagram of yet another frequency domain resource design scheme for S-SSB provided by an embodiment of the present disclosure. As illustrated in figure (c) of FIG. 18, the system configures/supports two BWPs (i.e., SL BWPs).

In some scenarios, BWP #0 may be the default/mandatory BWP (i.e., the default/mandatory frequency domain resource), and the BWP #0 is configured/pre-configured with S-SSB frequency domain resources. In this scenario, the terminal needs to send/receive the S-SSB on the BWP #0, where both the first type of terminal and the second type of terminal send/receive the S-SSB on the BWP #0.

In some scenarios, for the second type of terminal, S-SSB may be sent/received on BWP #0, and BWP #0 may be switched to BWP #1 for receiving/sending of service data.

FIG. 19 is a schematic diagram of still another frequency domain resource design scheme for S-SSB provided by an embodiment of the present disclosure.

In the example of FIG. 19, the entire frequency domain resources may be divided into a plurality of sub-bandwidths, or the system frequency domain resource may include a plurality of sub-bandwidths in one SL BWP. The plurality of sub-bandwidths may be, for example, a plurality of frequency ranges, a plurality of resource pools, a plurality of RB sets, or a plurality of channels.

As an example, the plurality of sub-bandwidths may be a plurality of frequency ranges, such as frequency range #0 to frequency range #2 in FIG. 19. The frequency ranges may overlap with each other or may not overlap with each other.

As another example, the plurality of sub-bandwidths may be a plurality of resource pools, such as resource pool #0 to resource pool #2 in FIG. 19. The resource pools may overlap with each other or may not overlap with each other.

As yet another example, the plurality of sub-bandwidths may be a plurality of RB sets, such as RB set #0 to RB set #2 in FIG. 19. The RB sets may not overlap with each other. In some embodiments, a guard period may also be configured between two adjacent RB sets.

As still another example, the plurality of sub-bandwidths may be a plurality of channels (not illustrated in FIG. 19) with no overlap between the respective channels.

In some scenarios, sub-bandwidth #1 (e.g., frequency range #1, resource pool #1, or RB set #1) may be used as a default/mandatory frequency domain resource (i.e., default/mandatory frequency band), or as a common frequency domain resource. In this scenario, the terminal needs to send/receive S-SSB at least in sub-bandwidth #1.

In some scenarios, sub-bandwidth #0 (such as frequency range #0, resource pool #0, or RB set #0) may be used as an additional/optional frequency domain resource. In this scenario, the terminal may send/receive the S-SSB on sub-bandwidth #0 selectively.

It can be understood that in the example illustrated in FIG. 19, the S-SSB frequency domain resource is not included in the sub-bandwidth #2 (such as the frequency range #2, the resource pool #2, or the RB set #2), and thus all terminals do not send/receive the S-SSB in the sub-bandwidth # 2.

Embodiments of the present disclosure design a method for configuring frequency domain resources of sidelink synchronization signals. In this method, in order to support communication and coexistence between terminals with different capabilities in the same system, and to ensure that the sidelink synchronization process can be completed, a narrower frequency band resource (i.e., frequency domain resource) may be defined or configured in the frequency domain for sending/receiving S-SSB. The narrower frequency band resource may be used as a common frequency domain resource dedicated to sending system messages such as synchronization, so that synchronization among all terminals in the sidelink can be ensured primarily. In addition, the method also supports additional frequency band resources for sending additional S-SSBs, and the additional frequency band resources may be used as supplements for sending/receiving synchronization signals between full-capability terminals. In some embodiments, for reduced-capability terminals, the synchronization process and the service data communication process may be performed on different frequency band resources by BWP switching, so that frequency domain resources can be utilized more efficiently.

Preferred embodiments of the present disclosure have been described in detail with reference to the accompanying drawings, but the present disclosure is not limited to the specific details of the above embodiments. Within the scope of the technical concept of the present disclosure, various simple modifications may be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do not violate the idea of the present disclosure, and they should likewise be regarded as the disclosed content of the present disclosure. For yet another example, on the premise of no conflict, various embodiments described in the present disclosure and/or the technical features in various embodiments may be arbitrarily combined with the related art, and the technical solution obtained after combination should also fall within the scope of protection of the present disclosure.

It is to be understood that in various method embodiments of the present disclosure, the size of the sequence numbers of the above-mentioned processes does not mean the order of execution, and the execution order of each process is to be determined by its function and inherent logic, and should not be limited in any way to the implementation process of the embodiments of the present disclosure. Further, in embodiments of the present disclosure, the terms "downlink", "uplink" and "sidelink" are used to denote the transmission direction of the signal or data, where "downlink" is used to denote the transmission direction of signals or data as a first direction sent from a site to user equipment of a cell, and "uplink" is used to denote the transmission direction of the signals or data as a second direction sent from the user equipment of the cell to the site, "sidelink" is used to denote the transmission direction of the signals or data as a first direction sent from user equipment 1 to user equipment 2. For example, "downlink signal" denotes that the transmission direction of the signals is the first direction. In the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

Based on the foregoing embodiments, there is provided a sidelink synchronization apparatus in the embodiments of the present disclosure.

FIG. 20 is a structural composition diagram of a sidelink synchronization apparatus provided by an embodiment of the present disclosure, which is applied to a terminal. As illustrated in FIG. 20, the sidelink synchronization apparatus 2000 includes a transceiver unit 2001.

The transceiver unit 2000 is configured to send or receive a sidelink synchronization signal block (S-SSB) on a first frequency domain resource, where the first frequency domain resource is part of a system frequency domain resource.

In some embodiments, the system frequency domain resource includes a plurality of S-SSB frequency domain resources within a sidelink bandwidth part (SL BWP); and the first frequency domain resource is part of the plurality of S-SSB frequency domain resources.

In some embodiments, frequency domain positions and/or a number of the plurality of S-SSB frequency domain resources are configured by a network or pre-configured.

In some embodiments, when the plurality of S-SSB frequency domain resources are distributed continuously, frequency domain positions of the plurality of S-SSB frequency domain resources are determined based on a starting position of an initial S-SSB frequency domain resource and a total length of the plurality of S-SSB frequency domain resources; when the plurality of S-SSB frequency domain resources are distributed discontinuously, the frequency domain positions of the plurality of S-SSB frequency domain resources are determined based on a starting position and a length of each of the S-SSB frequency domain resources; or, are determined based on the starting position of the initial S-SSB frequency domain resource, the total length of the plurality of S-SSB frequency domain resources, and an interval between every two adjacent S-SSB frequency domain resources.

In some embodiments, a number of the plurality of S-SSB frequency domain resources is a number of repetitions of one S-SSB within the SL BWP.

In some embodiments, the system frequency domain resource includes a plurality of sub-bandwidths within an SL BWP, and at least one of the plurality of sub-bandwidths contains S-SSB frequency domain resources; and the first frequency domain resource is part of sub-bandwidths in the plurality of sub-bandwidths, and the part of sub-bandwidths contains S-SSB frequency domain resources.

In some embodiments, for each sub-bandwidth within the part of sub-bandwidths, a frequency domain resource for sending of the S-SSB includes: all or part of S-SSB frequency domain resources within the sub-bandwidth.

In some embodiments, respective sub-bandwidths within the part of sub-bandwidths are adjacent in a frequency domain; or respective sub-bandwidths within the part of sub-bandwidths are not adjacent in the frequency domain; or a subset of the part of sub-bandwidths are adjacent in the frequency domain.

In some embodiments, in sub-bandwidths containing the S-SSB frequency domain resources, frequency domain positions and/or a number of S-SSB frequency domain resources contained in each of the sub-bandwidths are configured by a network or pre-configured.

In some embodiments, in sub-bandwidths containing S-SSB frequency domain resources, when the S-SSB frequency domain resources are distributed continuously, frequency domain positions of S-SSB frequency domain resources contained in each of the sub-bandwidths are determined based on a starting position of an initial S-SSB frequency domain resource within the sub-bandwidth and a total length of the S-SSB frequency domain resources within the sub-bandwidth; when the S-SSB frequency domain resources are distributed discontinuously, the frequency domain positions of the S-SSB frequency domain resources contained in each of the sub-bandwidths are determined based on a starting position and a length of each of the S-SSB frequency domain resources within the sub-bandwidth; or, are determined based on the starting position of the initial S-SSB frequency domain resource within the sub-bandwidth, the total length of the S-SSB frequency domain resources within the sub-bandwidth, and an interval between adjacent S-SSB frequency domain resources within the sub-bandwidth.

In some embodiments, in sub-bandwidths containing S-SSB frequency domain resources, a number of S-SSB frequency domain resources contained in each of the sub-bandwidths is a number of repetitions of one S-SSB within the sub-bandwidth, wherein numbers of S-SSB frequency domain resources contained in different sub-bandwidths are the same or different.

In some embodiments, the sub-bandwidth is a resource block (RB) set, a channel, a frequency range, or a resource pool.

In some embodiments, when the sub-bandwidth is the frequency range or the resource pool, the plurality of sub-bandwidths within the SL BWP overlap or do not overlap in a frequency domain; when the sub-bandwidth is the RB set or the channel, the plurality of sub-bandwidths within the SL BWP do not overlap in the frequency domain.

In some embodiments, the system frequency domain resource includes a plurality of SL BWPs, and at least one of the plurality of SL BWPs contains S-SSB frequency domain resources; and the first frequency domain resource is part of SL BWPs in the plurality of SL BWPs, and the part of SL BWPs contains S-SSB frequency domain resources.

In some embodiments, for each SL BWP within the part of SL BWPs, a frequency domain resource for sending of the S-SSB includes: all or part of S-SSB frequency domain resources within the SL BWP.

In some embodiments, respective SL BWPs within the part of SL BWPs are adjacent in a frequency domain; or respective SL BWPs within the part of SL BWPs are not adjacent in the frequency domain; or a subset of the part of SL BWPs are adjacent in the frequency domain.

In some embodiments, in SL BWPs containing S-SSB frequency domain resources, frequency domain positions and/or a number of S-SSB frequency domain resources contained in each of the SL BWPs are configured by a network or pre-configured.

In some embodiments, in SL BWPs containing S-SSB frequency domain resources, when the S-SSB frequency domain resources are distributed continuously, frequency domain positions of S-SSB frequency domain resources contained in each of the SL BWPs are determined based on a starting position of an initial S-SSB frequency domain resource within the SL BWP and a total length of the S-SSB frequency domain resources within the SL BWP; when the S-SSB frequency domain resources are distributed discontinuously, the frequency domain positions of the S-SSB frequency domain resources contained in each of the SL BWPs are determined based on a starting position and a length of each of S-SSB frequency domain resources within the SL BWP; or, are determined based on the starting position of the initial S-SSB frequency domain resource within the SL BWP, the total length of the S-SSB frequency domain resources within the SL BWP, and an interval between adjacent S-SSB frequency domain resources within the SL BWP.

In some embodiments, in SL BWPs containing S-SSB frequency domain resources, a number of S-SSB frequency domain resources contained in each of the SL BWPs is a number of repetitions of one S-SSB within the SL BWP, wherein numbers of S-SSB frequency domain resources contained in different SL BWPs are the same or different.

In some embodiments, the system frequency domain resource includes a plurality of carriers, and at least one of the plurality of carriers contains S-SSB frequency domain resources; and the first frequency domain resource is part of carriers in the plurality of carriers, and the part of carriers contains S-SSB frequency domain resources.

In some embodiments, for each carrier within the part of carriers, a frequency domain resource for sending of the S-SSB includes: all or part of S-SSB frequency domain resources within the carrier.

In some embodiments, respective carriers within the part of carriers are adjacent in a frequency domain; or respective carriers within the part of carriers are not adjacent in the frequency domain; or a subset of the part of carriers are adjacent in the frequency domain.

In some embodiments, in carriers containing S-SSB frequency domain resources, frequency domain positions and/or a number of S-SSB frequency domain resources contained in each of the carriers are configured by a network or pre-configured.

In some embodiments, in carriers containing S-SSB frequency domain resources, when the S-SSB frequency domain resources are distributed continuously, frequency domain positions of S-SSB frequency domain resources contained in each of the carriers are determined based on a starting position of an initial S-SSB frequency domain resource within the carrier and a total length of the S-SSB frequency domain resources within the carrier; when the S-SSB frequency domain resources are distributed discontinuously, the frequency domain positions of the S-SSB frequency domain resources contained in each of the carriers are determined based on a starting position and a length of each of the S-SSB frequency domain resources within the carrier; or, are determined based on the starting position of the initial S-SSB frequency domain resource within the carrier, the total length of the S-SSB frequency domain resources within the carrier, and an interval between adjacent S-SSB frequency domain resources within the carrier.

In some embodiments, in carriers containing S-SSB frequency domain resources, a number of S-SSB frequency domain resources contained in each of the carriers is a number of repetitions of one S-SSB within the carrier, wherein numbers of S-SSB frequency domain resources contained in different carriers are the same or different.

In some embodiments, the system frequency domain resource further includes a second frequency domain resource, and the second frequency domain resource is a frequency domain resource other than the first frequency domain resource within the system frequency domain resource; and the second frequency domain resource is used for sending or receiving of service data.

In some embodiments, the second frequency domain resource does not contain an S-SSB frequency domain resource.

In some embodiments, the system frequency domain resource further includes a second frequency domain resource, and the second frequency domain resource is a frequency domain resource other than the first frequency domain resource within the system frequency domain resource; and when the apparatus 2000 is capable of sending or receiving the S-SSB on the second frequency domain resource, the second frequency domain resource is used for sending or receiving of the S-SSB.

It will be understood by those skilled in the art that the above description of the sidelink synchronization apparatus of the embodiments of the present disclosure may be understood with reference to the description of the sidelink synchronization method of the embodiments of the present disclosure.

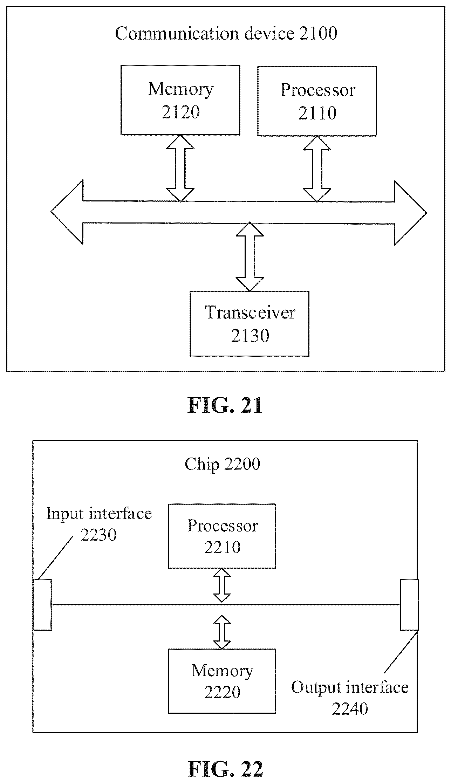

FIG. 21 is a schematic structural diagram of a communication device 2100 provided by an embodiment of the present disclosure. A communication device 2100 illustrated in FIG. 21 includes a processor 2110 that may call and execute a computer program from a memory to implement the method in the embodiments of the present disclosure.

Optionally, as illustrated in FIG. 21, the communication device 2100 may also include a memory 2120. The processor 2110 may call and execute a computer program from the memory 2120 to implement the method in the embodiments of the present disclosure.

The memory 2120 may be a separate device independent of the processor 2110 or may be integrated in the processor 2110.

As illustrated in FIG. 21, the communication device 2100 may also include a transceiver 2130. The processor 2110 may control the transceiver 2130 to communicate with other devices, and in particular send information or data to other devices, or receive information or data sent by other devices.

The transceiver 2130 may include a transmitter and a receiver. The transceiver 2130 may further include antennas. The number of antennas may be one or more.

The communication device 2100 specifically may be a terminal in the embodiments of the present disclosure, and the communication device 2100 may implement corresponding processes implemented by the terminal in the respective methods of the embodiment of the present disclosure, which will not be repeated here for the sake of brevity.

FIG. 22 is a schematic structural diagram of a chip according to an embodiment of the present disclosure. A chip 2200 illustrated in FIG. 22 includes a processor 2210 that may call and execute a computer program from a memory to implement the method in the embodiments of the present disclosure.

Optionally, as illustrated in FIG. 22, the chip 2200 may also include a memory 2220. The processor 2210 may call and execute a computer program from the memory 2220 to implement the method in the embodiments of the present disclosure.

The memory 2220 may be a separate device independent of the processor 2210 or may be integrated in the processor 2210.

Optionally, the chip 2200 may also include an input interface 2230. The processor 2210 may control the input interface 2230 to communicate with other devices or chips, and in particular to obtain information or data sent by other devices or chips.

Optionally, the chip 2200 may also include an output interface 2240. The processor 2210 may control the output interface 2240 to communicate with other devices or chips, and in particular to output information or data to other devices or chips.

The chip may be applied to be a terminal of the embodiments of the present disclosure, and the chip may implement corresponding processes implemented by the terminal in various methods of the embodiments of the present disclosure, which will not be repeated here for the sake of brevity.

It is to be understood that the chip mentioned in the embodiments of the present disclosure may also be referred to as a system-level chip, a system chip, a chip system or a system-on-chip or the like.

It is to be understood that the processor of the present disclosure may be an integrated circuit chip having a signal processing capability. In implementation, the actions of the above method embodiments may be accomplished by integrated logic circuitry of hardware in the processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program. The computer readable storage medium may be applied to the terminal of the embodiments of the present disclosure, and the computer program causes a computer to implement corresponding processes implemented by the terminal in the methods of the embodiments of the present disclosure, which will not be repeated here for the sake of brevity.

In an embodiment of the present disclosure, there is further provided a computer program product, which includes computer program instructions. The computer program product may be applied to the terminal of the embodiments of the present disclosure, and the computer program instructions cause a computer to implement corresponding processes implemented by the terminal in the methods of the embodiments of the present disclosure, which will not be repeated here for the sake of brevity.

In an embodiment of the present disclosure, there is further provided a computer program. The computer program may be applied to the terminal of the embodiments of the present disclosure, the computer program, when running on a computer, causes the computer to implement corresponding processes implemented by the terminal in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it is to be understood that the disclosed systems, apparatuses and methods may be implemented in other manners. For example, the above-described embodiments of the apparatus are only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional unit in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which is to be covered within the protection scope of the present disclosure. Therefore, the scope of protection of the present disclosure shall be subject to the scope of protection of the claims.

## Claims

1. A sidelink synchronization method, applied to a terminal, the method comprising:
   sending or receiving a sidelink synchronization signal block (S-SSB) on a first frequency domain resource, wherein the first frequency domain resource is part of a system frequency domain resource.

2. The method of claim 1, wherein

   the system frequency domain resource comprises a plurality of S-SSB frequency domain resources within a sidelink bandwidth part (SL BWP); and
   the first frequency domain resource is part of the plurality of S-SSB frequency domain resources.

3. The method of claim 2, wherein
   frequency domain positions and/or a number of the plurality of S-SSB frequency domain resources are configured by a network or pre-configured.

4. The method of claim 2 or 3, wherein

   when the plurality of S-SSB frequency domain resources are distributed continuously, frequency domain positions of the plurality of S-SSB frequency domain resources are determined based on a starting position of an initial S-SSB frequency domain resource and a total length of the plurality of S-SSB frequency domain resources;
   when the plurality of S-SSB frequency domain resources are distributed discontinuously, the frequency domain positions of the plurality of S-SSB frequency domain resources are determined based on a starting position and a length of each of the S-SSB frequency domain resources; or, are determined based on the starting position of the initial S-SSB frequency domain resource, the total length of the plurality of S-SSB frequency domain resources, and an interval between adjacent S-SSB frequency domain resources.

5. The method of any one of claims 2 to 4, wherein
   a number of the plurality of S-SSB frequency domain resources is a number of repetitions of one S-SSB within the SL BWP.

6. The method of claim 1, wherein

   the system frequency domain resource comprises a plurality of sub-bandwidths within an SL BWP, and at least one of the plurality of sub-bandwidths contains S-SSB frequency domain resources; and

the first frequency domain resource is part of sub-bandwidths in the plurality of sub-bandwidths, and the part of sub-bandwidths contains S-SSB frequency domain resources.

7.  The method of claim 6, wherein
    for each sub-bandwidth within the part of sub-bandwidths, a frequency domain resource for sending of the S-SSB comprises: all or part of S-SSB frequency domain resources within the sub-bandwidth.

8.  The method of claim 6 or 7, wherein

    respective sub-bandwidths within the part of sub-bandwidths are adjacent in a frequency domain; or
    respective sub-bandwidths within the part of sub-bandwidths are not adjacent in the frequency domain; or
    a subset of the part of sub-bandwidths are adjacent in the frequency domain.

9.  The method of any one of claims 6 to 8, wherein
    in sub-bandwidths containing S-SSB frequency domain resources, frequency domain positions and/or a number of S-SSB frequency domain resources contained in each of the sub-bandwidths are configured by a network or pre-configured.

10. The method of any one of claims 6 to 9, wherein in sub-bandwidths containing S-SSB frequency domain resources,

    when the S-SSB frequency domain resources are distributed continuously, frequency domain positions of S-SSB frequency domain resources contained in each of the sub-bandwidths are determined based on a starting position of an initial S-SSB frequency domain resource within the sub-bandwidth and a total length of the S-SSB frequency domain resources within the sub-bandwidth;
    when the S-SSB frequency domain resources are distributed discontinuously, the frequency domain positions of the S-SSB frequency domain resources contained in each of the sub-bandwidths are determined based on a starting position and a length of each of the S-SSB frequency domain resources within the sub-bandwidth; or, are determined based on the starting position of the initial S-SSB frequency domain resource within the sub-bandwidth, the total length of the S-SSB frequency domain resources within the sub-bandwidth, and an interval between adjacent S-SSB frequency domain resources within the sub-bandwidth.

11. The method of any one of claims 6 to 10, wherein
    in sub-bandwidths containing S-SSB frequency domain resources, a number of S-SSB frequency domain resources contained in each of the sub-bandwidths is a number of repetitions of one S-SSB within the sub-bandwidth, wherein numbers of S-SSB frequency domain resources contained in different sub-bandwidths are the same or different.

12. The method of any one of claims 6 to 11, wherein
    the sub-bandwidth is a resource block (RB) set, a channel, a frequency range, or a resource pool.

13. The method of claim 12, wherein

    when the sub-bandwidth is the frequency range or the resource pool, the plurality of sub-bandwidths within the SL BWP overlap or do not overlap in a frequency domain;
    when the sub-bandwidth is the RB set or the channel, the plurality of sub-bandwidths within the SL BWP do not overlap in the frequency domain.

14. The method of claim 1, wherein

    the system frequency domain resource comprises a plurality of SL BWPs, and at least one of the plurality of SL BWPs contains S-SSB frequency domain resources; and
    the first frequency domain resource is part of SL BWPs in the plurality of SL BWPs, and the part of SL BWPs contains S-SSB frequency domain resources.

15. The method of claim 14, wherein
    for each SL BWP within the part of SL BWPs, a frequency domain resource for sending of the S-SSB comprises: all or part of S-SSB frequency domain resources within the SL BWP.

16. The method of claim 14 or 15, wherein

respective SL BWPs within the part of SL BWPs are adjacent in a frequency domain; or
respective SL BWPs within the part of SL BWPs are not adjacent in the frequency domain; or
a subset of the part of SL BWPs are adjacent in the frequency domain.

17. The method of any one of claims 14 to 16, wherein
in SL BWPs containing S-SSB frequency domain resources, frequency domain positions and/or a number of S-SSB frequency domain resources contained in each of the SL BWPs are configured by a network or pre-configured.

18. The method of any one of claims 14 to 17, wherein in SL BWPs containing S-SSB frequency domain resources,

when the S-SSB frequency domain resources are distributed continuously, frequency domain positions of S-SSB frequency domain resources contained in each of the SL BWPs are determined based on a starting position of an initial S-SSB frequency domain resource within the SL BWP and a total length of the S-SSB frequency domain resources within the SL BWP;
when the S-SSB frequency domain resources are distributed discontinuously, the frequency domain positions of the S-SSB frequency domain resources contained in each of the SL BWPs are determined based on a starting position and a length of each of S-SSB frequency domain resources within the SL BWP; or, are determined based on the starting position of the initial S-SSB frequency domain resource within the SL BWP, the total length of the S-SSB frequency domain resources within the SL BWP, and an interval between adjacent S-SSB frequency domain resources within the SL BWP.

19. The method of any one of claims 14 to 18, wherein
in SL BWPs containing S-SSB frequency domain resources, a number of S-SSB frequency domain resources contained in each of the SL BWPs is a number of repetitions of one S-SSB within the SL BWP, wherein numbers of S-SSB frequency domain resources contained in different SL BWPs are the same or different.

20. The method of claim 1, wherein

the system frequency domain resource comprises a plurality of carriers, and at least one of the plurality of carriers contains S-SSB frequency domain resources; and
the first frequency domain resource is part of carriers in the plurality of carriers, and the part of carriers contains S-SSB frequency domain resources.

21. The method of claim 20, wherein
for each carrier within the part of carriers, a frequency domain resource for sending of the S-SSB comprises: all or part of S-SSB frequency domain resources within the carrier.

22. The method of claim 20 or 21, wherein

respective carriers within the part of carriers are adjacent in a frequency domain; or
respective carriers within the part of carriers are not adjacent in the frequency domain; or
a subset of the part of carriers are adjacent in the frequency domain.

23. The method of any one of claims 20 to 22, wherein
in carriers containing S-SSB frequency domain resources, frequency domain positions and/or a number of S-SSB frequency domain resources contained in each of the carriers are configured by a network or pre-configured.

24. The method of any one of claims 20 to 23, wherein in carriers containing S-SSB frequency domain resources,

when the S-SSB frequency domain resources are distributed continuously, frequency domain positions of S-SSB frequency domain resources contained in each of the carriers are determined based on a starting position of an initial S-SSB frequency domain resource within the carrier and a total length of the S-SSB frequency domain resources within the carrier;
when the S-SSB frequency domain resources are distributed discontinuously, the frequency domain positions of the S-SSB frequency domain resources contained in each of the carriers are determined based on a starting position and a length of each of the S-SSB frequency domain resources within the carrier; or, are determined based on the starting position of the initial S-SSB frequency domain resource within the carrier, the total length of the S-SSB frequency domain resources within the carrier, and an interval between adjacent S-SSB frequency domain resources within the carrier.

25. The method of any one of claims 20 to 24, wherein
in carriers containing S-SSB frequency domain resources, a number of S-SSB frequency domain resources contained in each of the carriers is a number of repetitions of one S-SSB within the carrier, wherein numbers of S-SSB frequency domain resources contained in different carriers are the same or different.

26. The method of any one of claims 1 to 25, wherein

the system frequency domain resource further comprises a second frequency domain resource, and the second frequency domain resource is a frequency domain resource other than the first frequency domain resource within the system frequency domain resource; and
the second frequency domain resource is used for sending or receiving of service data.

27. The method of claim 26, wherein
the second frequency domain resource contains no S-SSB frequency domain resource.

28. The method of any one of claims 1 to 26, wherein

the system frequency domain resource further comprises a second frequency domain resource, and the second frequency domain resource is a frequency domain resource other than the first frequency domain resource within the system frequency domain resource; and
when the terminal is capable of sending or receiving the S-SSB on the second frequency domain resource, the second frequency domain resource is used for sending or receiving of the S-SSB.

29. A sidelink synchronization apparatus, comprising:
a transceiver unit, configured to send or receive a sidelink synchronization signal block (S-SSB) on a first frequency domain resource, wherein the first frequency domain resource is part of a system frequency domain resource.

30. The apparatus of claim 29, wherein

the system frequency domain resource comprises a plurality of S-SSB frequency domain resources within a sidelink bandwidth part (SL BWP); and
the first frequency domain resource is part of the plurality of S-SSB frequency domain resources.

31. The apparatus of claim 30, wherein
frequency domain positions and/or a number of the plurality of S-SSB frequency domain resources are configured by a network or pre-configured.

32. The apparatus of claim 30 or 31, wherein

when the plurality of S-SSB frequency domain resources are distributed continuously, frequency domain positions of the plurality of S-SSB frequency domain resources are determined based on a starting position of an initial S-SSB frequency domain resource and a total length of the plurality of S-SSB frequency domain resources;
when the plurality of S-SSB frequency domain resources are distributed discontinuously, the frequency domain positions of the plurality of S-SSB frequency domain resources are determined based on a starting position and a length of each of the S-SSB frequency domain resources; or, are determined based on the starting position of the initial S-SSB frequency domain resource, the total length of the plurality of S-SSB frequency domain resources, and an interval between adjacent S-SSB frequency domain resources.

33. The apparatus of any one of claims 30 to 32, wherein
a number of the plurality of S-SSB frequency domain resources is a number of repetitions of one S-SSB within the SL BWP.

34. The apparatus of claim 29, wherein

the system frequency domain resource comprises a plurality of sub-bandwidths within an SL BWP, and at least one of the plurality of sub-bandwidths contains S-SSB frequency domain resources; and

the first frequency domain resource is part of sub-bandwidths in the plurality of sub-bandwidths, and the part of sub-bandwidths contains S-SSB frequency domain resources.

35. The apparatus of claim 34, wherein

for each sub-bandwidth within the part of sub-bandwidths, a frequency domain resource for sending of the S-SSB comprises: all or part of S-SSB frequency domain resources within the sub-bandwidth.

36. The apparatus of claim 34 or 35, wherein

respective sub-bandwidths within the part of sub-bandwidths are adjacent in a frequency domain; or

respective sub-bandwidths within the part of sub-bandwidths are not adjacent in the frequency domain; or

a subset of the part of sub-bandwidths are adjacent in the frequency domain.

37. The apparatus of any one of claims 34 to 36, wherein

in sub-bandwidths containing S-SSB frequency domain resources, frequency domain positions and/or a number of S-SSB frequency domain resources contained in each of the sub-bandwidths are configured by a network or pre-configured.

38. The apparatus of any one of claims 34 to 37, wherein in sub-bandwidths containing S-SSB frequency domain resources,

when the S-SSB frequency domain resources are distributed continuously, frequency domain positions of S-SSB frequency domain resources contained in each of the sub-bandwidths are determined based on a starting position of an initial S-SSB frequency domain resource within the sub-bandwidth and a total length of the S-SSB frequency domain resources within the sub-bandwidth;

when the S-SSB frequency domain resources are distributed discontinuously, the frequency domain positions of the S-SSB frequency domain resources contained in each of the sub-bandwidths are determined based on a starting position and a length of each of the S-SSB frequency domain resources within the sub-bandwidth; or, are determined based on the starting position of the initial S-SSB frequency domain resource within the sub-bandwidth, the total length of the S-SSB frequency domain resources within the sub-bandwidth, and an interval between adjacent S-SSB frequency domain resources within the sub-bandwidth.

39. The apparatus of any one of claims 34 to 38, wherein

in sub-bandwidths containing S-SSB frequency domain resources, a number of S-SSB frequency domain resources contained in each of the sub-bandwidths is a number of repetitions of one S-SSB within the sub-bandwidth, wherein numbers of S-SSB frequency domain resources contained in different sub-bandwidths are the same or different.

40. The apparatus of any one of claims 34 to 39, wherein

the sub-bandwidth is a resource block (RB) set, a channel, a frequency range, or a resource pool.

41. The apparatus of claim 40, wherein

when the sub-bandwidth is the frequency range or the resource pool, the plurality of sub-bandwidths within the SL BWP overlap or do not overlap in a frequency domain;

when the sub-bandwidth is the RB set or the channel, the plurality of sub-bandwidths within the SL BWP do not overlap in the frequency domain.

42. The apparatus of claim 29, wherein

the system frequency domain resource comprises a plurality of SL BWPs, and at least one of the plurality of SL BWPs contains S-SSB frequency domain resources; and

the first frequency domain resource is part of SL BWPs in the plurality of SL BWPs, and the part of SL BWPs contains S-SSB frequency domain resources.

43. The apparatus of claim 42, wherein

for each SL BWP within the part of SL BWPs, a frequency domain resource for sending of the S-SSB comprises: all or part of S-SSB frequency domain resources within the SL BWP.

**44.** The apparatus of claim 42 or 43, wherein

respective SL BWPs within the part of SL BWPs are adjacent in a frequency domain; or
respective SL BWPs within the part of SL BWPs are not adjacent in the frequency domain; or
a subset of the part of SL BWPs are adjacent in the frequency domain.

**45.** The apparatus of any one of claims 42 to 44, wherein
in SL BWPs containing S-SSB frequency domain resources, frequency domain positions and/or a number of S-SSB frequency domain resources contained in each of the SL BWPs are configured by a network or pre-configured.

**46.** The apparatus of any one of claims 42 to 45, wherein in SL BWPs containing S-SSB frequency domain resources,

when the S-SSB frequency domain resources are distributed continuously, frequency domain positions of S-SSB frequency domain resources contained in each of the SL BWPs are determined based on a starting position of an initial S-SSB frequency domain resource within the SL BWP and a total length of the S-SSB frequency domain resources within the SL BWP;
when the S-SSB frequency domain resources are distributed discontinuously, the frequency domain positions of the S-SSB frequency domain resources contained in each of the SL BWPs are determined based on a starting position and a length of each of S-SSB frequency domain resources within the SL BWP; or, are determined based on the starting position of the initial S-SSB frequency domain resource within the SL BWP, the total length of the S-SSB frequency domain resources within the SL BWP, and an interval between adjacent S-SSB frequency domain resources within the SL BWP.

**47.** The apparatus of any one of claims 42 to 46, wherein
in SL BWPs containing S-SSB frequency domain resources, a number of S-SSB frequency domain resources contained in each of the SL BWPs is a number of repetitions of one S-SSB within the SL BWP, wherein numbers of S-SSB frequency domain resources contained in different SL BWPs are the same or different.

**48.** The apparatus of claim 29, wherein

the system frequency domain resource comprises a plurality of carriers, and at least one of the plurality of carriers contains S-SSB frequency domain resources; and
the first frequency domain resource is part of carriers in the plurality of carriers, and the part of carriers contains S-SSB frequency domain resources.

**49.** The apparatus of claim 48, wherein
for each carrier within the part of carriers, a frequency domain resource for sending of the S-SSB comprises: all or part of S-SSB frequency domain resources within the carrier.

**50.** The apparatus of claim 48 or 49, wherein

respective carriers within the part of carriers are adjacent in a frequency domain; or
respective carriers within the part of carriers are not adjacent in the frequency domain; or
a subset of the part of carriers are adjacent in the frequency domain.

**51.** The apparatus of any one of claims 48 to 50, wherein
in carriers containing S-SSB frequency domain resources, frequency domain positions and/or a number of S-SSB frequency domain resources contained in each of the carriers are configured by a network or pre-configured.

**52.** The apparatus of any one of claims 48 to 51, wherein in carriers containing S-SSB frequency domain resources,

when the S-SSB frequency domain resources are distributed continuously, frequency domain positions of S-SSB frequency domain resources contained in each of the carriers are determined based on a starting position of an initial S-SSB frequency domain resource within the carrier and a total length of the S-SSB frequency domain resources within the carrier;
when the S-SSB frequency domain resources are distributed discontinuously, the frequency domain positions of the S-SSB frequency domain resources contained in each of the carriers are determined based on a starting position and a length of each of the S-SSB frequency domain resources within the carrier; or, are determined based on the starting position of the initial S-SSB frequency domain resource within the carrier, the total length of the S-SSB frequency domain resources within the carrier, and an interval between adjacent S-SSB frequency domain resources within the carrier.

53. The apparatus of any one of claims 48 to 52, wherein
in carriers containing S-SSB frequency domain resources, a number of S-SSB frequency domain resources contained in each of the carriers is a number of repetitions of one S-SSB within the carrier, wherein numbers of S-SSB frequency domain resources contained in different carriers are the same or different.

54. The apparatus of any one of claims 29 to 53, wherein

the system frequency domain resource further comprises a second frequency domain resource, and the second frequency domain resource is a frequency domain resource other than the first frequency domain resource within the system frequency domain resource; and
the second frequency domain resource is used for sending or receiving of service data.

55. The apparatus of claim 54, wherein
the second frequency domain resource contains no S-SSB frequency domain resource.

56. The apparatus of any one of claims 29 to 54, wherein

the system frequency domain resource further comprises a second frequency domain resource, and the second frequency domain resource is a frequency domain resource other than the first frequency domain resource within the system frequency domain resource; and
when the apparatus is capable of sending or receiving the S-SSB on the second frequency domain resource, the second frequency domain resource is used for sending or receiving of the S-SSB.

57. A terminal, comprising: a processor and a memory for storing a computer program, wherein the processor is configured to call and execute the computer program stored in the memory to implement the method of any one of claims 1 to 28.

58. A chip, comprising: a processor, configured to call and execute a computer program from a memory to cause a device equipped with the chip to implement the method of any one of claims 1 to 28.

59. A computer-readable storage medium, having stored thereon a computer program that causes a computer to implement the method of any one of claims 1 to 28.

60. A computer program product, comprising computer program instructions that cause a computer to implement the method of any one of claims 1 to 28.

61. A computer program, wherein the computer program causes a computer to implement the method of any one of claims 1 to 28.

Base station

Sidelink
communication

**FIG. 1**

Base station

Sidelink
communication

**FIG. 2**

Sidelink
communication

**FIG. 3**

UE1

Resource
allocation

Resource
allocation

UE2

UE3

Sidelink
communication

**FIG. 4**

UE1    Data    UE2

**FIG. 5**

Group

UE2

UE1

UE3

UE4

**FIG. 6**

UE2

UE6

UE3

UE1

UE5

UE4

**FIG. 7**

AGC

PSSCH

GP

PSCCH

(a)

AGC

PSSCH

GP PSFCH GP

PSCCH

(b)

**FIG. 8**

◄─Slot where PSFCH resources exist─► ◄─Slot where PSFCH resources do not exist─►

$M_{sc}^{PSSCH}(l)$

$M_{sc}^{PSCCH}(l)$

A
G
C

n-th transmission
of PSSCH

PSFCH
and
corresp
onding
AGC
and
GAP

G
P

A
G
C

(n+1)-th transmission
of PSSCH

G
P

PSCCH

PSCCH

**FIG. 9**

| AGC | DMRS and second-stage SCI | | Second -stage SCI | | | DMRS | PSSCH (Data portion) | | | | DMRS | | GP |
|---|---|---|---|---|---|---|---|---|---|---|---|---|---|
| | PSCCH | | | | | | | | | | | | |
| 0 | 1 | 2 | 3 | 4 | 5 | 6 | 7 | 8 | 9 | 10 | 11 | 12 | 13 |

**FIG. 10**

FIG. 11

FIG. 12

RE#0  RE#1  RE#2  RE#3  RE#4  RE#5  RE#6  RE#7  RE#8  RE#9  RE#10  RE#11

Port 0/ Port 1 | | Port 0/ Port 1 | | Port 0/ Port 1 | | Port 0/ Port 1 | | Port 0/ Port 1 | | Port 0/ Port 1 |

**FIG. 13**

**FIG. 14**

Channel occupancy time

Channel occupancy

Channel occupancy

LBT succeeds

Time domain

**FIG. 15**

Frequency domain

Carrier 3

Carrier 2

Carrier 1

Carrier 0

BWP 2

BWP 1

BWP 0

RB set 4

RB set 3

RB set 2

RB set 1

RB set 0

**FIG. 16**

A terminal sends or receives S-SSB on a first frequency domain resource, where the first frequency domain resource is part of a system frequency domain resource

S1701

**FIG. 17**

Frequency
domain

BWP#1 — S-SSB

BWP#1 — S-SSB

BWP#1 — S-SSB

(a)

BWP#1 — S-SSB / S-SSB / S-SSB

BWP#0 — S-SSB

(b)

BWP#1 } BWP#1 is used for sending/ reception of service data

BWP#0 — S-SSB / S-SSB } BWP#0 is used for sending/ reception of S-SSB

(c)

**FIG. 18**

Frequency
domain

BWP#1

| Frequency range #2/Resource pool #2 | RB set #2 | } No S-SSB frequency domain resource |
| Frequency range #1/Resource pool #1 | RB set #1 | S-SSB / S-SSB / S-SSB } Default/Mandatory frequency domain resource |
| Frequency range #0/Resource pool #0 | RB set #0 | S-SSB / S-SSB / S-SSB } Additional/ optional frequency domain resource |

**FIG. 19**

Sidelink synchronization
apparatus 2000

Transceiver unit 2001

**FIG. 20**

Communication device 2100

Memory
2120

Processor
2110

Transceiver
2130

**FIG. 21**

Chip 2200

Input interface
2230

Processor
2210

Memory
2220

Output interface
2240

**FIG. 22**

## INTERNATIONAL SEARCH REPORT

| International application No. |
| --- |
| **PCT/CN2023/107536** |

**A.     CLASSIFICATION OF SUBJECT MATTER**

H04W56/00(2009.01)i

According to International Patent Classification (IPC) or to both national classification and IPC

**B.     FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT; ENTXT; ENTXTC; VEN; DWPI; CNKI; 3GPP: 侧行, 侧链路, 副链路, 直连链路, 直通链路, 旁链路, 同步, 信号块, 频域, 带宽部分, 部分, sidelink, synchronization, frequency, domain, bandwidth part, BWP, S-SSB, SL-SSB, partial, signal block

**C.     DOCUMENTS CONSIDERED TO BE RELEVANT**

| Category* | Citation of document, with indication, where appropriate, of the relevant passages | Relevant to claim No. |
| --- | --- | --- |
| X | CN 116017733 A (ZTE CORP.) 25 April 2023 (2023-04-25) description, paragraphs [0036]-[0467], and figures 1-8 | 1-5, 14-33, 42-61 |
| Y | CN 116017733 A (ZTE CORP.) 25 April 2023 (2023-04-25) description, paragraphs [0036]-[0467], and figures 1-8 | 6-13, 34-41 |
| Y | CN 116319222 A (GUANGDONG OPPO MOBILE COMMUNICATIONS CO., LTD.) 23 June 2023 (2023-06-23) description, paragraphs [0183]-[0266], and figures 1-5 | 6-13, 34-41 |
| X | KR 20200018119 A (INNOVATIVE TECHNOLOGY LAB CO., LTD.) 19 February 2020 (2020-02-19) description, paragraphs [0020]-[0296], and figures 1-22 | 1-5, 14-33, 42-61 |
| X | WO 2021237675 A1 (GUANGDONG OPPO MOBILE COMMUNICATIONS CO., LTD.) 02 December 2021 (2021-12-02) description, page 2 line 36-page 17 line 2, and figures 1-17 | 1-5, 14-33, 42-61 |
| A | ETRI. "Discussion on NR V2X sidelink synchronization" *3GPP TSG RAN WG1 #96bis, R1-1904667*, 12 April 2019 (2019-04-12), entire document | 1-61 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 March 2024** | **13 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107536**

| Patent document cited in search report | | | Publication date (day/month/year) | Patent family member(s) | | | Publication date (day/month/year) |
|---|---|---|---|---|---|---|---|
| CN | 116017733 | A | 25 April 2023 | | None | | |
| CN | 116319222 | A | 23 June 2023 | WO | 2018227622 | A1 | 20 December 2018 |
| | | | | US | 2020092888 | A1 | 19 March 2020 |
| | | | | US | 2021127395 | A1 | 29 April 2021 |
| | | | | US | 2023254869 | A1 | 10 August 2023 |
| | | | | EP | 3627921 | A1 | 25 March 2020 |
| | | | | EP | 4044730 | A1 | 17 August 2022 |
| | | | | EP | 4221405 | A1 | 02 August 2023 |
| | | | | JP | 2020524939 | A | 20 August 2020 |
| | | | | KR | 20200016887 | A | 17 February 2020 |
| | | | | KR | 20220025232 | A | 03 March 2022 |
| | | | | KR | 20230007568 | A | 12 January 2023 |
| | | | | CN | 110024460 | A | 16 July 2019 |
| | | | | CN | 111132336 | A | 08 May 2020 |
| | | | | CN | 116319223 | A | 23 June 2023 |
| | | | | JP | 2022084880 | A | 07 June 2022 |
| | | | | JP | 2023089197 | A | 27 June 2023 |
| KR | 20200018119 | A | 19 February 2020 | WO | 2020032704 | A1 | 13 February 2020 |
| | | | | KR | 20200018118 | A | 19 February 2020 |
| WO | 2021237675 | A1 | 02 December 2021 | EP | 4161185 | A1 | 05 April 2023 |
| | | | | US | 2023090640 | A1 | 23 March 2023 |
| | | | | CN | 115606286 | A | 13 January 2023 |

Form PCT/ISA/210 (patent family annex) (July 2022)